(19) Europäisches Patentamt / European Patent Office / Office européen des brevets

(11) **EP 2 555 179 B1**

(12) **EUROPEAN PATENT SPECIFICATION**

(45) Date of publication and mention
of the grant of the patent:
**18.10.2017 Bulletin 2017/42**

(51) Int Cl.:
*G08G 5/04* *(2006.01)*    *G05D 1/10* *(2006.01)*
*G01C 23/00* *(2006.01)*    *G08G 5/00* *(2006.01)*

(21) Application number: **12178454.0**

(22) Date of filing: **30.07.2012**

(54) **Aircraft traffic separation system**

Flugzeugverkehrs-Trennsystem

Système de séparation de trafic aérien

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2011 US 201113196678**

(43) Date of publication of application:
**06.02.2013 Bulletin 2013/06**

(73) Proprietor: **The Boeing Company
Chicago, IL 60606-1596 (US)**

(72) Inventor: **Bushnell, Glenn Scott
Puyallup, WA 98374 (US)**

(74) Representative: **Howson, Richard G.B.
Kilburn & Strode LLP
20 Red Lion Street
London WC1R 4PJ (GB)**

(56) References cited:
**US-A1- 2002 080 059    US-A1- 2009 088 972
US-A1- 2009 125 221**

**Description**

**BACKGROUND INFORMATION**

**1. Field:**

The present disclosure relates generally to aircraft and, in particular, to managing movement of aircraft. Still more particularly, the present disclosure relates to a method and apparatus for maintaining a desired level of separation between aircraft.

**2. Background:**

Air traffic control (ATC) is a service used to direct aircraft on the ground and in the air. This service may be used in controlling aircraft, such as, for example, unmanned aerial vehicles (UAVs), helicopters, and/or other suitable types of aircraft. Currently, air traffic control is provided by ground-based air traffic control systems and human air traffic controllers. Typically, these ground-based air traffic control systems and human air traffic controllers provide information to pilots and/or other operators of aircraft that may be used to expedite the flow of air traffic on the ground and in the air. Further, the pilots and/or other operators of the aircraft may use this information as well as their own situational awareness to maintain separation between the aircraft on the ground and in the air.

Various rules and regulations may govern a desired level of separation between an aircraft and other aircraft. In some cases, this separation may be defined as a minimum distance from the aircraft in any number of directions. For example, this separation may be defined as a minimum distance from the aircraft with respect to the lateral, vertical, and/or longitudinal directions.

Air traffic control may be labor intensive and costly. For example, air traffic control systems may require more processing resources, personnel, and/or other resources than desired. Further, even though an air traffic control system may provide instructions to an aircraft to maintain a desired level of separation from other aircraft, the pilot of the aircraft is still responsible for operating the aircraft to actually maintain this level of separation.

Additionally, factors such as, for example, weather conditions, visibility conditions, reduced situational awareness, fatigue, stress, level of experience, and/or other suitable factors may affect the ability of the pilot of the aircraft to make decisions and perform aircraft maneuvers to maintain the desired level of separation between the aircraft and other aircraft. These same factors may also affect the ability of human air traffic controllers to provide the most accurate information and/or instructions to the pilot of the aircraft.

Therefore, it would be advantageous to have a method and apparatus that takes into account at least some of the issues discussed above, as well as possibly other issues.

US 2009/0088972 discloses systems and methods for providing vehicle-centric collision avoidance. In one arrangement, a method includes determining a first flight trajectory for a first aircraft. The method also includes determining a second flight trajectory for a second aircraft. A distance between the first aircraft and the second aircraft at a first closest point of approach (CPA) is predicted. The predicted closest point of approach is then compared to a separation perimeter layer. The separation perimeter layer is configured to provide a minimum separation distance from the first aircraft to the second aircraft. When the predicted closest point of approach breaches the separation perimeter, the first flight trajectory is altered to provide collision avoidance.

**SUMMARY**

In one advantageous embodiment, a method for managing separation between vehicles is provided. A closest point of approach between a first vehicle traveling along a first path and a second vehicle traveling along a second path is predicted. A number of compensation commands for altering the first path of the first vehicle are generated using the closest point of approach and a desired level of separation between the first vehicle and the second vehicle. The number of compensation commands is integrated with a number of control commands for the first vehicle to form a final number of control commands configured to maneuver the first vehicle to substantially maintain the desired level of separation between the first vehicle and the second vehicle. A response of the first vehicle to the final number of control commands is a desired response, characterized in that the number of compensation commands are generated by a separation management module using a number of parameters selected such that the response of a first vehicle to the final number of control commands is the desired response, wherein the desired response comprises at least one of a desired ride quality, a desired level of passenger comfort, a desired range of acceleration, a desired response time, and a desired turning rate.

In another advantageous embodiment, a system comprises a separation management module. The separation management module is configured to predict a closest point of approach between a first vehicle traveling along a first path and a second vehicle traveling along a second path using the first path and the second path. The separation management module is further configured to generate a number of compensation commands for altering the first path of the first vehicle using the closest point of approach and a desired level of separation between the first vehicle and the second vehicle. The separation management module is further configured to integrate the number of compensation commands with a number of control commands for the first vehicle to form a final number of control commands configured to maneuver the first vehicle to substantially maintain the desired level of separation between the first vehicle and the second vehicle. A response of the first vehicle to the final number of control commands is a desired response, characterized in that the number of compensation commands are generated by the separation management module using a number of parameters selected such that the response of a first vehicle to the final number of control commands is the desired response, wherein the desired response comprises at least one of a desired ride quality, a desired level of passenger comfort, a desired range of acceleration, a desired response time, and a desired turning rate.

The features, functions, and advantages can be achieved independently in various embodiments of the present disclosure or may be combined in yet other embodiments in which further details can be seen with reference to the following description and drawings.

## BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof, will best be understood by reference to the following detailed description of an advantageous embodiment of the present disclosure when read in conjunction with the accompanying drawings, wherein:

Figure 1 is an illustration of a vehicle management environment in the form of a block diagram in accordance with an advantageous embodiment;
Figure 2 is an illustration of boundaries for desired levels of separation in accordance with an advantageous embodiment;
Figure 3 is an illustration of an air traffic management environment in accordance with an advantageous embodiment;
Figure 4 is an illustration of another air traffic management environment in accordance with an advantageous embodiment;
Figure 5 is an illustration of a block diagram of an avionics system that provides collision avoidance in accordance with an advantageous embodiment;
Figure 6 is an illustration of a block diagram of a collision avoidance system in accordance with an advantageous embodiment;
Figure 7 is an illustration of equations for predicting a closest point of approach between two aircraft in accordance with an advantageous embodiment;
Figure 8 is an illustration of a vehicle-centric avoidance system in accordance with an advantageous embodiment;
Figure 9 is an illustration of a collision avoidance module in accordance with an advantageous embodiment;
Figure 10 is an illustration of a dynamic trajectory generator in accordance with an advantageous embodiment;
Figure 11 is an illustration of a system for providing collision avoidance to aircraft in accordance with an advantageous embodiment;
Figure 12 is an illustration of a separation compensation component in accordance with an advantageous embodiment;
Figure 13 is an illustration of an encounter between two aircraft in accordance with an advantageous embodiment;
Figure 14 is an illustration of another encounter between two aircraft in accordance with an advantageous embodiment;
Figure 15 is an illustration of an encounter between two aircraft in accordance with an advantageous embodiment;
Figure 16 is an illustration of an encounter between two aircraft in accordance with an advantageous embodiment;
Figure 17 is an illustration of two aircraft flying in airspace in accordance with an advantageous embodiment;
Figure 18 is an illustration of a flowchart of a process for managing vehicles in accordance with an advantageous embodiment;
Figure 19 is an illustration of a data processing system in accordance with an advantageous embodiment; and
Figure 20 is an illustration of a side elevation view of an aircraft in accordance with an advantageous embodiment.

## DETAILED DESCRIPTION

The different advantageous embodiments recognize and take into account one or more different considerations. For example, the different advantageous embodiments recognize and take into account that avoidance systems currently in use on aircraft provide a backup to the observations and directions provided by an air traffic control system.

The different advantageous embodiments recognize and take into account that currently available avoidance systems may provide warnings to aircraft when two or more aircraft are flying too close to each other. Further, these avoidance systems may also provide one or more of the aircraft with a suggested maneuver that may reduce a risk of collision. However, the different advantageous embodiments recognize and take into account that it may be desirable to have an avoidance system on an aircraft that can control the aircraft to reduce a risk of collision between the aircraft and other aircraft.

Further, the different advantageous embodiments recognize and take into account that having an avoidance system that can control the aircraft to reduce the risk of collision without requiring input from an operator of the aircraft may be desirable. For example, the different advantageous embodiments recognize and take into account that it may be desirable to have an avoidance system that is capable of altering the flight path of the aircraft and/or causing the aircraft to perform maneuvers to reduce a risk of collision between the aircraft and other aircraft without requiring operator input. With this type of avoidance system, the different advantageous embodiments recognize and take into account that the possibility of human error and/or the risk of an operator performing a maneuver that will increase the risk of collision may be reduced.

Additionally, the different advantageous embodiments recognize and take into account that using an avoidance system on an aircraft that can control the aircraft to reduce a risk of collision without requiring operator input may reduce the workload of human air traffic controller and air traffic control systems. As a result, these human air traffic controllers and air traffic control systems may be able to manage the flights of an increased number of aircraft.

Further, the different advantageous embodiments recognize and take into account that an avoidance system that can control an aircraft to reduce a risk of collision between the aircraft and other aircraft without requiring operator input may be used in unmanned aerial vehicles (UAVs). As a result, fewer processing resources and/or personnel may be needed to monitor the flight of unmanned aerial vehicles performing commercial and/or military operations.

Thus, the different advantageous embodiments provide a method and apparatus for managing separation between vehicles. In one advantageous embodiment, a method for managing separation between vehicles is provided. A closest point of approach between a first vehicle traveling along a first path and a second vehicle traveling along a second path is predicted. A number of compensation commands for altering the first path of the first vehicle are generated using the closest point of approach and a desired level of separation between the first vehicle and the second vehicle. The number of compensation commands is integrated with a number of control commands for the first vehicle to form a final number of control commands configured to maneuver the first vehicle to substantially maintain the desired level of separation between the first vehicle and the second vehicle. A response of the first vehicle to the final number of control commands is a desired response.

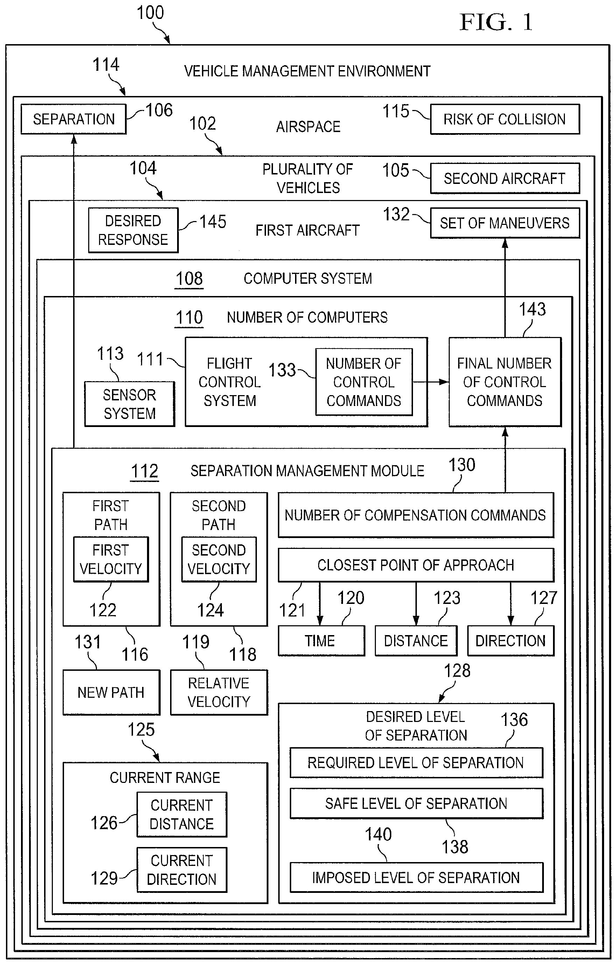

With reference now to the figures, and in particular to **Figure 1,** an illustration of a vehicle management environment in the form of a block diagram is depicted in accordance with an advantageous embodiment. In these illustrative examples, vehicle management environment **100** includes plurality of vehicles **102.** A vehicle in plurality of vehicles **102** may be selected from one of an aircraft, an unmanned aerial vehicle, a helicopter, a submarine, a surface ship, a missile, a spacecraft, a ground vehicle, or some other suitable type of vehicle.

As one illustrative example, a first vehicle in plurality of vehicles **102** may be first aircraft **104** and a second vehicle in plurality of vehicles **102** may be second aircraft **105.** Separation **106** between first aircraft **104** and second aircraft **105** while at least one of these vehicles is operating may be managed using separation management module **112.** Separation management module **112** may be implemented using hardware, software, or a combination of both.

In these illustrative examples, separation management module **112** may be implemented in computer system **108.** Computer system **108** takes the form of number of computers **110** in these examples. As used herein, a number of items means one or more items. For example, a number of computers means one or more computers. Depending on the implementation, number of computers **110** may be located in at least one of first aircraft **104,** second aircraft **105,** another vehicle in plurality of vehicles **102,** a ground station, an air traffic control station, or some other suitable location.

As used herein, the phrase "at least one of", when used with a list of items, means that different combinations of one or more of the listed items may be used and only one of each item in the list may be needed. For example, "at least one of item A, item B, and item C" may include, for example, without limitation, item A, or item A and item B. This example also may include item A, item B, and item C, or item B and item C. In other examples, "at least one of" may be, for example, without limitation, two of item A, one of item B, and ten of item C; four of item B and seven of item C; and other suitable combinations.

In these depicted examples, computer system **108** with separation management module **112** is located on first aircraft **104.** In particular, separation management module **112** is configured to provide separation **106** between first aircraft **104** and other vehicles within plurality of vehicles **102** when first aircraft **104** is on the ground and/or in the air.

In these illustrative examples, first aircraft **104** and second aircraft **105** are traveling in airspace **114.** Separation management module **112** is configured to provide separation **106** between first aircraft **104** and second aircraft **105** to reduce risk of collision **115** between first aircraft **104** and second aircraft **105** in airspace **114.** Further, separation management module **112** may be configured to provide separation **106** between first aircraft **104** and other vehicles within plurality of vehicles **102.**

As depicted, separation management module **112** identifies first path **116** for first aircraft **104** and second path **118** for second aircraft **105.** First path **116** may be a first flight path for first aircraft **104.** Second path **118** may be a second flight path for second aircraft **105.** In these illustrative examples, the information used in identifying a path for a vehicle may include at least one of a velocity, a speed, a heading, a direction of travel, a position, an orientation, an attitude, a route, a course, a turn rate, a climb rate, and other suitable information for the vehicle. A velocity is a measurement of a rate and direction of change of a position for a vehicle. In this manner, velocity includes both magnitude and direction for the change in the position of the vehicle. The magnitude of the velocity is the speed of the vehicle.

In these illustrative examples, separation management module **112** may identify first path **116** for first aircraft **104** using information obtained from a number of sources. These sources may include, for example, at least one of flight control system **111** onboard first aircraft **104,** sensor system **113** onboard first aircraft **104,** an air traffic control system, and other suitable sources of information.

Flight control system **111** may include at least one of an autopilot system, a flight management system, a flight director, a navigation system, and a number of suitable systems used to control operation of first aircraft **104.** In one illustrative example, separation management module **112** may identify first path **116** using predetermined flight paths stored in a navigation system in flight control system **111.**

Further, sensor system **113** onboard first aircraft **104** comprises a number of sensors. These sensors may include at least one of, for example, without limitation, a global positioning system unit, an inertial measurement unit, a camera system, a radar system, a surveillance system, a laser range meter, a position identification system, an altimeter, and other suitable types of sensors. In some illustrative examples, separation management module **112** may identify first path **116** of first aircraft **104** using sensor data generated by sensor system **113.**

Further, separation management module **112** also may identify second path **118** for second aircraft **105** using information obtained from a number of different sources. These sources may include, for example, without limitation, at least one of a flight management system onboard second aircraft **105,** a sensor system onboard second aircraft **105,** sensor system **113** onboard first aircraft **104,** an air traffic control system, and other suitable sources of information.

In one illustrative example, second path **118** for second aircraft **105** may be identified using predetermined flight paths for second aircraft **105** received from second aircraft **105** and/or an air traffic control system. In another illustrative example, second path **118** may be identified using sensor data generated by sensor system **113** onboard first aircraft **104.**

As depicted in this example, first path **116** includes first velocity **122** for first aircraft **104.** Second path **118** includes second velocity **124** for second aircraft **105.** In some illustrative examples, separation management module **112** may also be configured to identify relative velocity **119.** Relative velocity **119** may be the velocity of second aircraft **105** with respect to first aircraft **104** or the velocity of first aircraft **104** with respect to second aircraft **105,** depending on the implementation.

Separation management module **112** predicts closest point of approach (CPA) **121** between first aircraft **104** and second aircraft **105** using first path **116** for first aircraft **104** and second path **118** for second aircraft **105.** In these illustrative examples, closest point of approach **121** between first aircraft **104** traveling on first path **116** and second aircraft **105** traveling on second path **118** is predicted to occur when distance **123** between first aircraft **104** and second aircraft **105** has a minimum value if first aircraft **104** continues traveling along first path **116** and second aircraft **105** continues traveling along second path **118.**

In other words, in predicting closest point of approach **121,** separation management module **112** predicts distance **123** between first aircraft **104** and second aircraft **105** that is expected to be smallest if first aircraft **104** continues traveling along first path **116** and second aircraft **105** continues traveling along second path **118.** Distance **123** between first aircraft **104** and second aircraft **105** predicted at closest point of approach **121** may also be referred to as a miss distance.

Further, in predicting closest point of approach **121,** separation management module **112** also predicts direction **127** of second aircraft **105** with respect to first aircraft **104.** Direction **127** is the direction of second aircraft **105** with respect to first aircraft **104** when distance **123** between first aircraft **104** and second aircraft **105** is predicted to have the minimum value.

In these illustrative examples, distance **123** and direction **127** at closest point of approach **121** define a range between first aircraft **104** and second aircraft **105** at closest point of approach **121.** This range is the smallest range that is predicted to occur between these two aircraft as the two aircraft travel along their respective paths. Further, this range may be represented as a vector having a magnitude that is distance **123** at closest point of approach **121** and a direction that is direction **127** at closest point of approach **121.** In this manner, closest point of approach **121** may be represented as a vector.

Additionally, separation management module **112** also predicts time **120** to closest point of approach **121** using first path **116** for first aircraft **104** and second path **118** for second aircraft **105.** Time **120** to closest point of approach **121** is the period of time from a current time to a time at which closest point of approach **121** occurs. In other words, time **120** is the period of time from the current time to a time at which distance **123** between first aircraft **104** and second aircraft **105** has the minimum value. In these illustrative examples, time **120** to closest point of approach **121** may also be referred to as a time-to-go to closest point of approach **121.**

In some illustrative examples, distance **123** at closest point of approach **121** may be predicted using time **120** to closest point of approach **121** that has been predicted. In other illustrative examples, time **120** to closest point of approach may be predicted using distance **123** between first aircraft **104** and second aircraft **105** that has been predicted.

In these illustrative examples, current range **125** also is used in predicting closest point of approach **121** between first aircraft **104** and second aircraft **105**. Current range **125** includes current distance **126** between first aircraft **104** and second aircraft **105** and current direction **129** of second aircraft **105** with respect to first aircraft **104.**

In one illustrative example, current range **125** may be identified using a current position of first aircraft **104** and a current position of second aircraft **105**. In some illustrative examples, current range **125** may be identified without requiring an identification of the positions of second aircraft **105** and first aircraft **104**. For example, current range **125** may be identified using a radar system, a laser range meter, and/or some other suitable types of range identification system.

Desired level of separation **128** may currently be present between first aircraft **104** and second aircraft **105** based on current range **125** between first aircraft **104** and second aircraft **105**. However, as first aircraft **104** and second aircraft **105** travel along first path **116** and second path **118,** respectively, desired level of separation **128** between first aircraft **104** and second aircraft **105** may be lost. This loss of desired level of separation **128** may be referred to as a loss of separation between first aircraft **104** and second aircraft **105.**

In these depicted examples, separation management module **112** makes a determination as to whether first aircraft **104** and second aircraft **105** are predicted to have desired level of separation **128** between first aircraft **104** and second aircraft **106** at closest point of approach **121**. In other words, separation management module **112** determines whether distance **123** between first aircraft **104** and second aircraft **105** predicted at closest point of approach **121** provides desired level of separation **128.**

Desired level of separation **128** is selected to reduce and/or eliminate risk of collision **115** between first aircraft **104** and second aircraft **105**. In other words, desired level of separation **128** may be selected such that a possibility of a collision between first aircraft **104** and second aircraft **105** may be reduced and/or avoided. A determination that distance **123** predicted at closest point of approach **121** does not provide desired level of separation **128** indicates that at some point during the flights of first aircraft **104** and second aircraft **105,** a loss of separation may occur. Separation management module **112** may control first aircraft **104** such that desired level of separation **128** is maintained and the loss of separation is prevented from occurring.

For example, separation management module **112** may be configured to generate number of compensation commands **130** for first aircraft **104**. In these illustrative examples, number of compensation commands **130** may also be referred to as a number of avoidance commands.

Number of compensation commands **130** may be configured to cause first aircraft **104** to alter first path **116**. For example, number of compensation commands **130** may be configured to alter first path **116** for first aircraft **104** to increase distance **123** between first aircraft **104** and second aircraft **105** predicted at closest point of approach **121**. Increasing distance **123** between first aircraft **104** and second aircraft **105** predicted at closest point of approach **121** may provide desired level of separation **128** at closest point of approach **121.**

For example, number of compensation commands **130** may cause first aircraft **104** to perform set of maneuvers **132** to maintain desired level of separation **128** between first aircraft **104** and second aircraft **105**. As used herein, a set of items means zero or more items. For example, a set of maneuvers means zero, one, or more maneuvers. Further, a set may be an empty or null set.

A maneuver in set of maneuvers **132** may be selected from at least one of a turning maneuver, a climbing maneuver, a descending maneuver, a banking maneuver, an acceleration maneuver, a deceleration maneuver, and other suitable types of maneuvers. In these illustrative examples, set of maneuvers **132** may be an empty set when desired level of separation **128** is present based on closest point of approach **121** predicted between first aircraft **104** and second aircraft **105.**

In these illustrative examples, number of compensation commands **130** is integrated with number of control commands **133** generated by flight control system **111** to control operation of first aircraft **104**. Number of control commands **133** includes the commands that control the flight of first aircraft **104** in airspace **114.**

For example, number of control commands **133** may include at least one of a climb acceleration command, a turn rate command, a climb rate command, an altitude command, a pitch command, a yaw command, a roll command, an acceleration command, a deceleration command, a lateral acceleration command, and other suitable commands. In this manner, number of control commands **133** is configured to maneuver first aircraft **104** in airspace **114.**

Number of compensation commands **130** may be integrated with number of control commands **133** to adjust number of control commands **133** such that first aircraft **104** performs set of maneuvers **132**. For example, separation management module **112** may generate number of compensation commands **130** that may be integrated with number of control commands **133** to alter first path **116** for first aircraft **104** to new path **131.** New path **131** may also be referred to as an altered flight path. New path **131** may include at least one of a new velocity, a new speed, a new heading, and a new direction of travel for first aircraft **104.**

In these illustrative examples, integration of number of compensation commands **130** with number of control commands **133** may form final number of control commands **143** that are used to maneuver first vehicle **105** to substantially maintain desired level of separation **128** between first aircraft **104** and second aircraft **105.** In particular, this integration may be performed in a manner such that a response of first aircraft **104** to final number of control commands **143** is desired response **145.** More specifically, final number of control commands **143** is configured to produce desired response **145** by first aircraft **104.**

In other words, number of compensation commands **130** is integrated with number of control commands **133** such that first aircraft **104** performs set of maneuvers **132** in a desired manner. In this manner, desired response **145** may also be referred to as a desired maneuvering response for first aircraft **104.**

Desired response **145** may comprise at least one of, for example, without limitation, a desired ride quality for the flight of first aircraft **104,** a desired level of passenger comfort during the flight, a desired range of acceleration, a desired response time, a desired turning rate, and other suitable factors in the response of first aircraft **104.** The desired response time may be, for example, how quickly first aircraft **104** is desired to respond to final number of control commands **143.** In some cases, the desired response time may be how quickly first aircraft **104** is desired to initiate set of maneuvers **132** once final number of control commands **143** have been issued.

Further, in some cases, desired response **145** of aircraft may also include a desired time within which flight path **116** of flight aircraft **104** is to be altered such that the new separation predicted between first aircraft **104** and second aircraft **105** at a new predicted closest point of approach provides desired level of separation **128.** In other cases, desired response **145** may include a desired time after which first path **116** is to be reacquired after desired level of separation **128** has been provided at the predicted closest point of approach.

In these illustrative examples, separation management module **112** is configured to monitor separation **106** between first aircraft **104** and other vehicles in plurality of vehicles **102** continuously. In other illustrative examples, separation **106** may be monitored periodically. For example, separation management module **112** may be configured to monitor separation **106** between first aircraft **104** and second aircraft **105** every tenth of a second, every second, every several seconds, or based on some other suitable period of time.

In one illustrative example, separation management module **112** may perform the operations of identifying second path **118** for second aircraft **105,** predicting closest point of approach **121,** and determining whether desired level of separation **128** is present at closest point of approach **121** about every tenth of a second. In other illustrative examples, these operations may be initiated, disabled, and/or influenced by a human operator for first aircraft **104.**

As depicted, desired level of separation **128** may be selected from one of required level of separation **136,** safe level of separation **138,** and imposed level of separation **140.** Required level of separation **136** may be based on requirements and/or regulations provided by, for example, without limitation, an air traffic control system.

Additionally, required level of separation **136** may be based on factors in addition to, and/or in place of, the requirements and/or regulations provided by the air traffic control system. These factors may include, for example, without limitation, aircraft type and/or aircraft class, operating parameters, size, a current phase of flight, planned phases of flight, altitude, and/or other suitable factors related to first aircraft **104** and/or second aircraft **105.**

In these illustrative examples, the parameters used to define required level of separation **136** may remain substantially constant for a flight of first aircraft **104.** In other illustrative examples, the parameters used to define required level of separation **136** may change during the flight of first aircraft **104.** For example, required level of separation **136** may change during the flight of first aircraft **104** in response to changes in weather conditions, visibility conditions, changes in environmental conditions, a change to a mission for first aircraft **104,** different portions of airspace **114,** and/or other types of events.

Safe level of separation **138** is a higher level of separation than required level of separation **136.** Safe level of separation **138** includes required level of separation **136** and an additional amount of separation. This additional amount of separation may take into account any uncertainty or error with respect to the prediction of closest point of approach **121.** In particular, safe level of separation **138** takes into account any uncertainty that may be present in the prediction of distance **123** at closest point of approach **121.**

Further, imposed level of separation **140** is a higher level of separation than safe level of separation **138.** Imposed level of separation **140** incudes safe level of separation **138** and an additional amount of separation. This additional amount of separation may take into account any predictable error in the response of first aircraft **104** to an alteration in first path **116** initiated by separation management module **112.**

The illustration of vehicle management environment **100** in **Figure 1** is not meant to imply physical or architectural limitations to the manner in which an advantageous embodiment may be implemented. Other components in addition to and/or in place of the ones illustrated may be used. Some components may be unnecessary. Also, the blocks are presented to illustrate some functional components. One or more of these blocks may be combined and/or divided into different blocks when implemented in an advantageous embodiment.

For example, in other illustrative examples, separation management module 112 may be configured to manage separation 106 between first aircraft 104 and additional vehicles in addition to, and/or in place of, second aircraft 105 in plurality of vehicles 102. Further, in some illustrative examples, first aircraft 104 may be stationary or moving on the ground, while second aircraft 105 is flying in airspace 114.

In still other illustrative examples, desired level of separation 128 may be defined with respect to second aircraft 105 instead of first aircraft 104. For example, desired level of separation 128 may be defined as a distance from second aircraft 105 that first aircraft 104 should maintain while traveling in airspace 114. Additionally, in other illustrative examples, time 120 may be an actual time at which closest point of approach 121 may occur rather than the period of time until closest point of approach 121 occurs with respect to the current time.

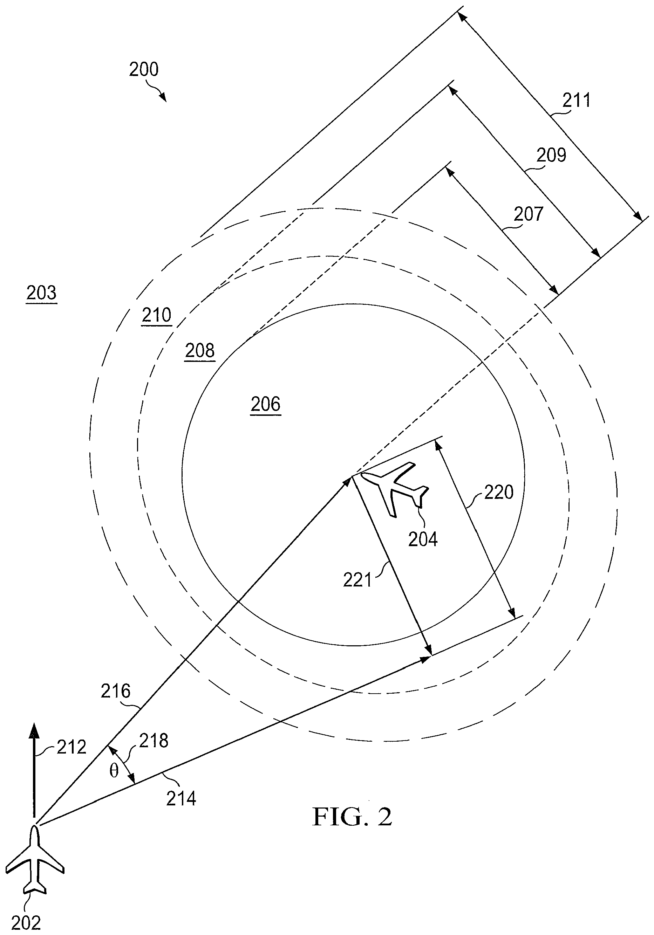

With reference now to **Figure 2,** an illustration of boundaries for desired levels of separation is depicted in accordance with an advantageous embodiment. In this illustrative example, boundaries 200 define different levels of separation that may be desired between first aircraft 202 and other aircraft traveling in airspace 203.

First aircraft 202 and second aircraft 204 are examples of implementations for first aircraft 104 and second aircraft 105, respectively, in **Figure 1.** In this illustrative example, separation management module 112 from **Figure 1** may be configured to manage separation between first aircraft 202 and second aircraft 204 while first aircraft 202 and second aircraft 204 are traveling in airspace 203.

As depicted, boundaries 200 for first aircraft 202 are defined with respect to second aircraft 204. For example, boundaries 200 include boundary 206, boundary 208, and boundary 210. These boundaries define the portion of airspace 203 with respect to second aircraft 204 in which both first aircraft 202 and second aircraft 204 should not simultaneously be present.

For example, boundary 206 provides a required level of separation between first aircraft 202 and second aircraft 204. This level of separation is an example of required level of separation 136 in **Figure 1.** Boundary 206 is at distance 207 from second aircraft 204. Distance 207 is a required distance, $m_{required}$, for separation between second aircraft 204 and first aircraft 202. In other words, distance 207 is the minimum distance from second aircraft 204 that should be maintained by first aircraft 202 to provide the required level of separation between first aircraft 202 and second aircraft 204.

In these illustrative examples, distance 207 may be selected by, for example, a pilot of first aircraft 202, an air traffic control system, the airline to which first aircraft 202 belongs, or some other suitable authority. Distance 207 may be selected based on factors such as, for example, safety regulations, a size of first aircraft 202, operating parameters for first aircraft 202, maneuvering capabilities of first aircraft 202, a type of mission being performed by first aircraft 202, and/or other suitable factors.

Boundary 208 provides a safe level of separation between first aircraft 202 and second aircraft 204. This level of separation is an example of safe level of separation 138 in **Figure 1.** Boundary 206 is at distance 209 from second aircraft 204. Distance 209 is a safe distance, $m_{safe}$, for separation between second aircraft 204 and first aircraft 202. In other words, distance 209 is the distance from second aircraft 204 that should be maintained by first aircraft 202 to provide the safe level of separation between first aircraft 202 and second aircraft 204.

In these illustrative examples, distance 209 may be computed by separation management module 112 from **Figure 1** using distance 207. For example, distance 209 may be computed as the sum of the required distance and the product of an estimated uncertainty and a gain. In other words, distance 209 may be computed using the following equation:

$$m_{safe} = m_{required} + k_m \sigma_m, \qquad\qquad (1)$$

where $k_m$ is the gain, and $\sigma_m$ is the estimated uncertainty.

The estimated uncertainty is an estimate of the uncertainty in the prediction of the closest point of approach between first aircraft 202 and second aircraft 204. In particular, the estimated uncertainty is an estimate of the uncertainty in distance 220 predicted between first aircraft 202 and second aircraft 204 at the closest point of approach predicted between first aircraft 202 and second aircraft 204. Distance 220 is also referred to as the miss distance, m, at the closest point of approach between first aircraft 202 and second aircraft 204.

In these illustrative examples, the uncertainty may be based on deviations that occur during the flights of first aircraft 202 and second aircraft 204. These deviations may include, for example, deviations in the range between first aircraft 202 and second aircraft 204, the heading of first aircraft 202 and/or second aircraft 204, the relative velocity of second aircraft 204 with respect to first aircraft 202, and/or other parameters. These deviations may occur in response to, for example, without limitation, weather conditions, wind conditions, sensor noise, tracking errors, and/or other suitable factors.

Further, this uncertainty may be based on estimated errors in the identification of the flight path for first aircraft **202** and the flight path for second aircraft **204.** These errors may include, for example, the errors estimated for the identification of the velocities and positions of first aircraft **202** and/or second aircraft **204.**

Boundary **210** provides an imposed level of separation between first aircraft **202** and second aircraft **204.** This level of separation is an example of imposed level of separation **140** in **Figure 1.** In this illustrative example, this imposed level of separation is the level of separation desired between first aircraft **202** and second aircraft **204.** However, in other illustrative examples, the required level of separation and/or safe level of separation may be selected as the desired level of separation.

Boundary **210** is at distance **211** from second aircraft **204.** Distance **211** is an imposed distance, $m_{imposed}$, for separation between second aircraft **204** and first aircraft **202.** Distance **211** is the safe distance, $m_{safe}$, divided by a steady state response gain, $C_{ss}$, for the system used to identify the closest point of approach. In other words, distance **209** is:

$$m_{imposed} = (m_{required} + k_m \sigma_m) / C_{ss} \quad . \qquad (2)$$

In this illustrative example, velocity vector **212** represents the velocity of first aircraft **202.** Further, relative velocity vector **214** represents the relative velocity of first aircraft **202** with respect to second aircraft **204** in this illustrative example.

As depicted, range vector **216** indicates the distance between first aircraft **202** and second aircraft **204** as well as the direction of the position of second aircraft **204** relative to the position of first aircraft **202.** Angle **218** is the angle formed by relative velocity vector **214** and range vector **216.**

In this illustrative example, if first aircraft **202** and second aircraft **204** continue on their respective flight paths at the same velocities, the time to the closest point of approach predicted between the two aircraft may be defined as follows:

$$t_{CPA} = R\cos(\theta) / V_{relative}, \qquad (3)$$

where $T_{CPA}$ is the time to the closest point of approach, R is the magnitude of range vector **216,** $\theta$ is angle **218,** and $V_{relative}$ is the magnitude of relative velocity vector **214.**

As depicted, vector **221** represents the closest point of approach between first aircraft **202** and second aircraft **204.** The magnitude of vector **221** is distance **220.** As described earlier, distance **220** is the miss distance, m, between first aircraft **202** and second aircraft **204.** In other words, distance **220** is the distance of first aircraft **202** from second aircraft **204** predicted at the time to the closest point of approach.

When distance **220** is less than distance **211,** the desired level of separation is not predicted to occur at the closest point of approach. The distance needed to obtain the desired level of separation at the closest point of approach may be computed as the miss distance subtracted from the imposed distance. This distance may also be referred to as the recover distance. In particular, the recover distance is the additional distance from second aircraft **204** needed to recover the desired level of separation. The recover distance may be given by the following equation:

$$d_{recover} = (m_{imposed} - m). \qquad (4)$$

In these illustrative examples, commands may be generated that cause first aircraft **202** to alter its flight path such that the desired level of separation is maintained between first aircraft **202** and second aircraft **204.** First aircraft **202** may alter its flight path by changing headings, climbing, descending, turning, slowing down, speeding up, or performing some other suitable operation.

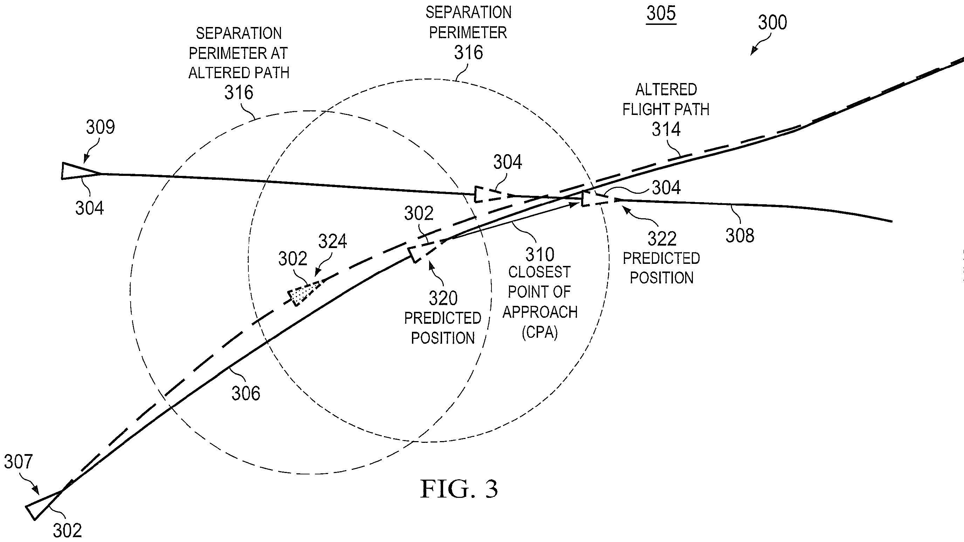

With reference now to **Figure 3,** an illustration of an air traffic management environment is depicted in accordance with an advantageous embodiment. Air traffic management environment **300** is an example of one implementation for vehicle management environment **100** in **Figure 1.**

As illustrated, first aircraft **302** and second aircraft **304** are traveling in airspace **305** in air traffic management environment **300.** First aircraft **302** may be an example of one implementation for first aircraft **104** in **Figure 1.** Second aircraft **304** may be an example of one implementation for second aircraft **105** in **Figure 1.**

First aircraft **302** may be equipped with a collision avoidance system, referred to as a vehicle-centric collision avoidance system. A vehicle-centric collision avoidance system is a system configured for the specific vehicle on which the system is located. The vehicle-centric collision avoidance system in first aircraft **302** may include a separation management module, such as separation management module **112** in **Figure 1,** configured to reduce the risk of collision between first aircraft **302** and second aircraft **304.** For example, the vehicle-centric collision avoidance system on first aircraft **302** may be configured to cause first aircraft **302** to perform escape maneuvers to avoid a collision with second aircraft **304** and/or other aircraft (not shown) in air traffic management environment **300.**

As depicted, first aircraft **302** is traveling on flight path **306** in airspace **305,** while second aircraft **304** is traveling on flight path **308** in airspace **305.** In this illustrative example, first aircraft **302** is currently at position **307** along flight path **306** and second aircraft **304** is currently at position **309** along flight path **308.**

The vehicle-centric collision avoidance system of first aircraft **302** may be configured to predict closest point of approach (CPA) **310** between first aircraft **302** and second aircraft **304** with respect to first aircraft **302.** Closest point of approach **310** indicates the smallest range between first aircraft **302** and second aircraft **304** that is predicted to occur when first aircraft **302** and second aircraft **304** continue on flight path **306** and flight path **308,** respectively.

As depicted, closest point of approach **310** is predicted to occur when first aircraft **302** is at predicted position **320** along flight path **306** and second aircraft **304** is at predicted position **322** along flight path **308.** Closest point of approach **310** may be represented as a range vector having both magnitude and direction with respect to first aircraft **302.** In these illustrative examples, the magnitude of the vector indicates the distance between first aircraft **302** and second aircraft **304** at closest point of approach **310.** In other words, the magnitude is the distance between predicted position **320** for first aircraft **302** and predicted position **322** for second aircraft **304.** As described earlier, the distance between first aircraft **302** and second aircraft **304** at closest point of approach **310** may be also referred to as the miss distance between these two aircraft at closest point of approach **310.**

Further, the direction of the vector for closest point of approach **310** indicates the direction of predicted position **322** for second aircraft **304** at closest point of approach **310** with respect to predicted position **320** for first aircraft **302.**

Additionally, the vehicle-centric collision avoidance system of first aircraft **302** may predict a time to closest point of approach **310.** In other words, the vehicle-centric collision avoidance system of first aircraft **302** may predict the time at which closest point of approach **310** between first aircraft **302** and second aircraft **304** is predicted to occur. In some illustrative examples, the time to closest point of approach **310** may be referred to as a predicted time-to-go or predicted time duration before first aircraft **302** reaches closest point of approach **310.**

In these illustrative examples, making a prediction of closest point of approach **310** may include identifying the current range between first aircraft **302** and second aircraft **304.** The current range includes the current distance between first aircraft **302** in position **307** and second aircraft **304** in position **309.** Further, the current range may include the direction of position **309** for second aircraft **304** with respect to position **309** for first aircraft **302.**

As illustrated, separation perimeter **316** may be predefined in the vehicle-centric collision avoidance system of first aircraft **302.** Separation perimeter **316** may be a boundary that defines a desired level of separation with respect to first aircraft **302.** In some illustrative examples, the boundary may be at a distance from first aircraft **302** that is substantially equal in all directions. When separation perimeter **316** is three-dimensional, separation perimeter **316** may also be referred to as a separation perimeter layer. For example, separation perimeter **316** may be defined as a three-dimensional layer or surface around first aircraft **302** in the form of a sphere.

In this manner, separation perimeter **316** indicates the distance from first aircraft **302** in any number of directions that provides a desired level of separation between first aircraft **302** and other aircraft in airspace **305.** The vehicle-centric collision avoidance system of first aircraft **302** is configured to maintain this desired level of separation between first aircraft **302** and other aircraft.

Accordingly, the vehicle centric collision avoidance system of first aircraft **302** may generate avoidance commands when the range between first aircraft **302** and second aircraft **304** at closest point of approach **310** is within, or "breaches", predefined separation perimeter **316.** In other words, avoidance commands may be generated when predicted position **322** of second aircraft **304** at the time to closest point of approach **310** is within separation perimeter **316** for first aircraft **302** with respect to predicted position **320** for first aircraft **302** at the time to closest time of approach **310.**

In some illustrative examples, avoidance commands may only be generated when the time to closest point of approach is within a selected time boundary. For example, if the time to closest point of approach **310** is over five minutes away, the vehicle centric collision avoidance system of first aircraft **302** may not generate avoidance commands until the time to closest point of approach **310** reaches about one minute.

The avoidance commands that are generated may be configured to alter flight path **306** of first aircraft **302.** In some cases, the avoidance commands that are generated may also alter the speed of the aircraft.

For example, the vehicle-centric collision avoidance system of first aircraft **302** may generate one or more avoidance commands that cause first aircraft **302** to reactively alter flight path **306** of first aircraft **302** to altered flight path **314** in response to predicted position **322** for second aircraft **304** being within separation perimeter **316** when first aircraft **302** has predicted position **320.** In this manner, the vehicle-centric collision avoidance system in first aircraft **302** may automatically ensure that proper separation, as defined by separation perimeter **316,** is maintained between first aircraft **302** and second aircraft **304** at substantially all times.

When flight path **306** of first aircraft **302** is altered to altered flight path **314,** the vehicle-centric collision avoidance system in first aircraft **302** predicts a new closest point of approach between first aircraft **302** and second aircraft **304** that is different from closest point of approach **310.** The new closest point of approach is predicted to occur when first aircraft **302** is at predicted position **324** along altered flight path **314.**

The portion of airspace **305** defined within separation perimeter **316** when first aircraft **302** is at predicted position **324** along altered flight path **314** is different than the portion of airspace **305** defined within separation perimeter **316** when first aircraft **302** is at predicted position **322** along flight path **306.** Altered flight path **314** for first aircraft **302** may be selected such that the predicted position for second aircraft **304** at the new closest point of approach is outside of separation perimeter **316** for first aircraft **302** when first aircraft **302** is at predicted position **324** for the new closest point of approach.

The vehicle-centric collision avoidance system of first aircraft **302** may continuously monitor for aircraft traffic in airspace **305,** while first aircraft **302** is on altered flight path **314.** In particular, the vehicle-centric collision avoidance system of first aircraft **302** may continuously identify the closest point of approach for first aircraft **302** as first aircraft **302** and second aircraft **304** travel in airspace **305.** Further, the vehicle-centric collision avoidance system may continuously predict whether second aircraft **304** will be present in the portion of airspace **305** within separation perimeter **316** at the time predicted for the closest point of approach.

In this manner, first aircraft **302** may continue to generate avoidance commands to cause first aircraft **302** to alter its flight path until second aircraft **304** is no longer predicted to be within separation perimeter **316** for first aircraft **302** at the time predicted for the closest point of approach between first aircraft **302** and second aircraft **304.** In other words, first aircraft **302** may return to flight path **306** when the vehicle-centric collision avoidance system of first aircraft **302** determines that the potential for a breach of separation perimeter **316** no longer exists.

In other illustrative examples, a plurality of separation perimeters may be predefined in the vehicle-centric collision avoidance system of first aircraft **302.** For example, separation perimeter **316** may include multiple desired levels of separation or separation perimeter layers. As further described below, the plurality of separation perimeter layers may be defined based on temporal parameters, aircraft velocity, aircraft rates of motion, distance parameters, relative velocity, relative rates of motion, and/or other suitable parameters.

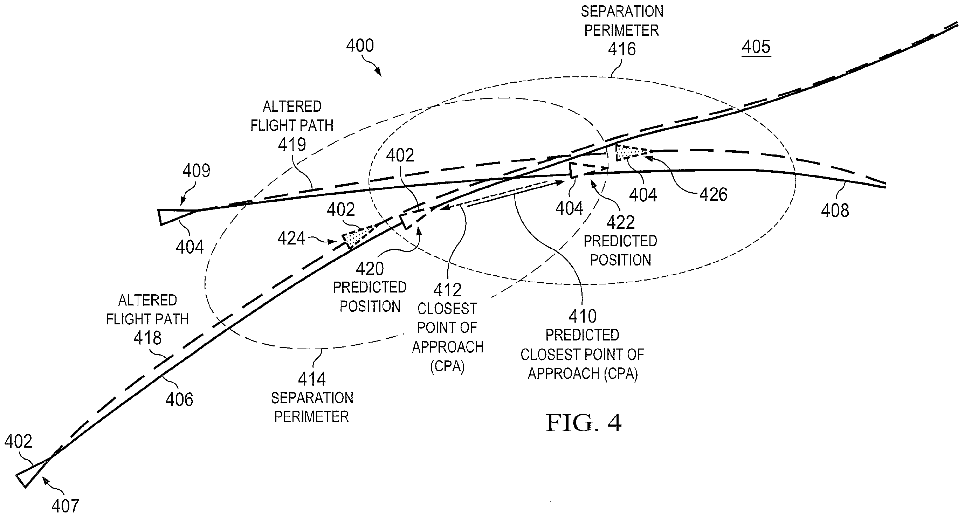

With reference now to **Figure 4,** an illustration of another air traffic management environment is depicted in accordance with an advantageous embodiment. In this illustrative example, air traffic management environment **400** is another example of one implementation for vehicle management environment **100** in **Figure 1.**

As depicted, air traffic management environment **400** in **Figure 4** includes first aircraft **402** and second aircraft **404.** First aircraft **402** and second aircraft **404** are both equipped with a vehicle-centric collision avoidance system in this depicted example. The vehicle-centric collision avoidance systems of first aircraft **402** and second aircraft **404** may operate in a manner similar to the manner described for the vehicle-centric collision avoidance system of first aircraft **302** in **Figure 3.**

As depicted, first aircraft **402** is traveling on flight path **406** in airspace **405,** while second aircraft **404** is traveling on flight path **408** in airspace **405.** First aircraft **402** is currently at position **407** along flight path **408.** Second aircraft **404** is currently at position **409.**

The vehicle-centric collision avoidance system of first aircraft **402** may be configured to predict closest point of approach **410** with respect to first aircraft **402.** Likewise, the vehicle-centric collision avoidance system of second aircraft **404** may be configured to predict closest point of approach **412** with respect to second aircraft **404.**

Closest point of approach **410** and closest point of approach **412** indicate the smallest range that is predicted to occur between first aircraft **402** and second aircraft **404** as these aircraft continue on flight path **406** and flight path **408,** respectively. In this illustrative example, closest point of approach **410** and closest point of approach **412** are predicted to occur when first aircraft **402** is at predicted position **420** along flight path **406** and when second aircraft **404** is at predicted position **422** along flight path **408.**

Further, the vehicle-centric collision avoidance system of first aircraft **402** may predict a time to closest point of approach **410** for first aircraft **402,** while the vehicle-centric collision avoidance system of second aircraft **404** may predict a time to closest point of approach **412** for second aircraft **404.** Additionally, making the prediction of closest point of approach **410** and closest point of approach **412** may include identifying the current range between first aircraft **402** and second aircraft **404.** The current range includes the distance between position **407** of first aircraft **402** and position **409** of second aircraft **404,** as well as a direction of position **409** for second aircraft **404** with respect to position **407** for first aircraft **402.**

Separation perimeter **414** for first aircraft **402** may be predefined in the vehicle-centric collision avoidance system of first aircraft **402.** Similarly, separation perimeter **416** for second aircraft **404** may be predefined in the vehicle collision avoidance system of second aircraft **404.**

Accordingly, the vehicle-centric collision avoidance system of first aircraft **402** may generate avoidance commands when the range between first aircraft **402** and second aircraft **404** at closest point of approach **410** is within, or "breaches", predefined separation perimeter **414.** In other words, avoidance commands may be generated when predicted position **422** for second aircraft **404** is within separation perimeter **414** for first aircraft **402** when first aircraft **402** is at predicted position **420.**

In a corresponding fashion, the vehicle-centric collision avoidance system of second aircraft **404** may produce avoidance commands when the range between first aircraft **402** and second aircraft **404** at closest point of approach **412** is within, or "breaches", predefined separation perimeter **416**. In other words, avoidance commands may be generated when predicted position **420** for first aircraft **402** is within separation perimeter **416** for second aircraft **404** when second aircraft **404** is at predicted position **422**.

The avoidance commands generated by each of the vehicle-centric collision avoidance systems of first aircraft **402** and first aircraft **402** may cause first aircraft **402** and second aircraft **404** to alter flight path **406** and flight path **408**, respectively. Further, the avoidance commands may also alter the speed of the aircraft in some illustrative examples.

For example, as shown in **Figure 4**, the vehicle-centric collision avoidance system of first aircraft **402** may generate one or more avoidance commands that cause first aircraft **402** to reactively alter flight path **406** to altered flight path **418**. Similarly, the vehicle-centric collision avoidance system of second aircraft **404** may generate one or more avoidance commands that cause second aircraft **404** to alter flight path **408** to altered flight path **419**.

The vehicle-centric avoidance systems of first aircraft **402** and second aircraft **404** may predict a new closest point of approach for altered flight path **418** and altered flight path **419**. The new closest point of approach may be predicted to occur when first aircraft **402** is at predicted position **424** and second aircraft **404** is at predicted position **426**. As illustrated in **Figure 4**, predicted position **424** for first aircraft **402** is outside of separation perimeter **416** for second aircraft **404** and predicted position **426** for second aircraft **404** is outside of separation perimeter **414** for first aircraft **402** at the time predicted for the new closest point of approach.

In this manner, the vehicle-centric collision avoidance systems of first aircraft **402** and second aircraft **404** may automatically ensure that proper separation, as defined by separation perimeter **414** and separation perimeter **416**, respectively, is maintained at substantially all times. However, first aircraft **402** and/or second aircraft **404** may return to flight path **406** and/or flight path **408**, respectively, when the vehicle-centric collision systems of these aircraft determine that the potential for a breach of separation perimeter **414** and/or separation perimeter **416**, respectively, no longer exists.

In other illustrative examples, a plurality of separation perimeter layers may be predefined in the vehicle-centric collision avoidance system of first aircraft **402** and/or second aircraft **404**. For example, separation perimeter **414** and/or separation perimeter **416** may include multiple separation perimeter layers. As further described below, the plurality of separation perimeter layers may be defined based on temporal parameters, aircraft velocity, aircraft motion rates, distance parameters, relative rates of motion, relative velocity, and/or other suitable parameters. One of the temporal parameters may be the time to the closest point of approach.

Accordingly, the capability to automatically alter the flight paths for aircraft may reduce or eliminate the risk of collisions due to human error, miscommunication associated with current collision avoidance systems, and/or other factors. Additionally, the vehicle-centric avoidance system of an aircraft may decrease the workload of ground-based air traffic controllers by diminishing their involvement in mitigating potential aircraft collisions.

The illustrations of **Figure 3** and **Figure 4** are not meant to imply limitations to the manner in which the different advantageous embodiments may be implemented. For example, in some illustrative examples, other aircraft in addition to first aircraft **302** and second aircraft **304** may be present in air traffic management environment **300**.

As one illustrative example, the vehicle-centric collision avoidance system of first aircraft **402** may be configured to generate avoidance commands to alter flight path **406** for first aircraft **402** to an altered flight path other than altered flight path **418** when more than one aircraft is predicted to be present within separation perimeter **414** for first aircraft **402** at the time at which closest point of approach **410** is predicted to occur.

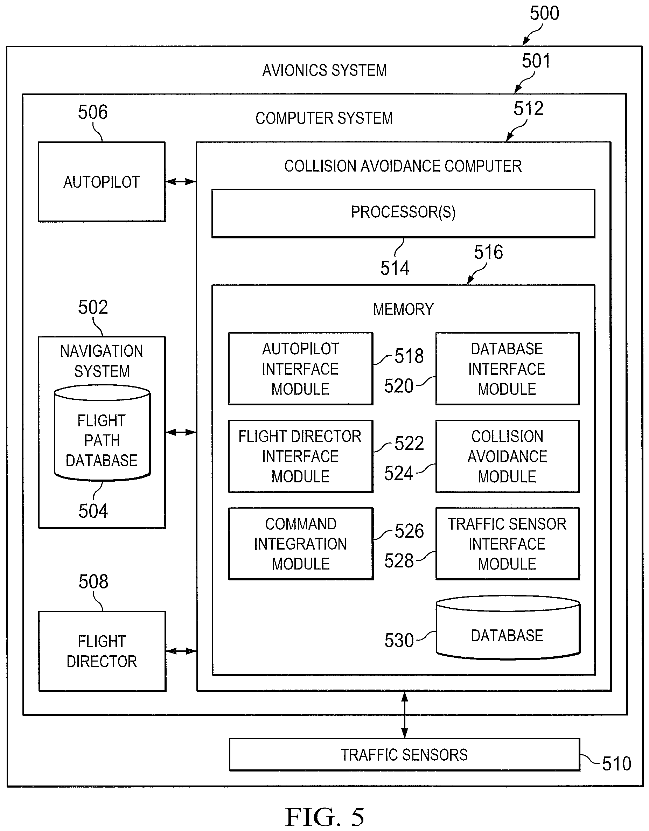

With reference now to **Figure 5**, an illustration of a block diagram of an avionics system that provides collision avoidance is depicted in accordance with an advantageous embodiment. Avionics system **500** may be implemented in an aircraft, such as, for example, first aircraft **104** in **Figure 1**, first aircraft **302** in **Figure 3**, first aircraft **402** in **Figure 4**, and/or second aircraft **404** in **Figure 4**. The vehicle-centric avoidance systems described for first aircraft **302** in **Figure 3** as well as first aircraft **402** and second aircraft **404** in **Figure 4** may be implemented in avionics system **500**.

In these illustrative examples, one or more components in avionics system **500** may be implemented in computer system **501**. Computer system **501** is an example of one implementation for computer system **108** in **Figure 1**. Computer system **501** takes the form of a number of computers in these examples. When more than one computer is present in computer system **501**, these computers may be in communication with each other.

For example, avionics system **500** may include navigation system **502**, flight path database **504**, autopilot **506**, flight director **508**, traffic sensors **510**, and collision avoidance computer **512**. Navigation system **502**, autopilot **506**, flight director **508**, and collision avoidance computer **512** may be implemented in one or more computers in computer system **501**. Further, one or more of navigation system **502**, autopilot **506**, and flight director **508** may be implemented in flight control system **111** in **Figure 1**.

Navigation system **502** may be used to provide the geographical position of the aircraft during flight. The geographical position of the aircraft is the position of the aircraft defined using a geographical coordinate system. Navigation system **502** may include an Inertial Reference System (IRS), an Attitude Heading and Reference System (AHRS), a Global Positioning System (GPS), and other similar systems. A portion of these systems may be implemented in computer system **501,** while another portion of these systems may comprise sensors and/or other devices external to computer system **501.**

In these illustrative examples, navigation system **502** may include flight path database **504** onboard the aircraft. Flight path database **504** provides flight path information for the aircraft. The flight path information includes predetermined flight paths for the aircraft. In some illustrative examples, the flight path information may include predetermined courses for the aircraft. A course for an aircraft is a direction of travel or heading for the aircraft. This direction of travel may be defined, for example, as an angle with respect to true North. A course for an aircraft may also be referred to as a heading.

Autopilot **506** is generally configured to pilot the aircraft without human intervention. In various implementations, autopilot **506** may obtain flight information from navigation system **502.** This flight information may include, for example, position, heading, attitude, speed, and/or other suitable types of flight information for the aircraft. Autopilot **506** may also obtain flight path information from flight path database **504.**

By comparing the flight information with the flight path information, autopilot **506** may issue control commands to maintain the aircraft on a particular flight path. For example, autopilot **506** may compute throttle settings and issue flight control surface commands.

Flight director **508** is generally configured to compute and display the desired flight path for the aircraft to one or more pilots during a specific flight. For example, when a pilot is following a predetermined course for the aircraft, flight director **508** may interact with flight path database **504** and autopilot **506** to compute and display the necessary flight maneuvers for traveling along the predetermined course to the pilot.

In these illustrative examples, the flight director **508** may include a flight director indicator (FDI), a horizontal situation indicator (HSI), a mode selector, and a flight director computer. Moreover, the flight director indicator may include a display that may present an attitude indicator, a fixed aircraft symbol, pitch and bank command bars, a glide slope indicator, a localizer deviation indicator, and/or other suitable types of indicators.

Flight director **508** may provide a pilot with steering commands necessary to obtain and hold a desired course or flight path. In some illustrative examples, flight director **508** may further provide steering commands to autopilot **506,** which autopilot **506** may translate into commands for the flight control surfaces of the aircraft.

Traffic sensors **510** may be configured to obtain positions of traffic aircraft. Traffic aircraft include any number of other aircraft that may be traveling in the airspace through which the aircraft is traveling. According to various embodiments, traffic sensors **510** may be configured to receive traffic data from a Traffic Alert and Collision Avoidance System (TCAS), an Automatic Dependent Surveillance (ADS) system, a ground-based air traffic control (ATC) system, an on-board traffic surveillance radar system, and/or other air traffic detection systems.

As depicted in this example, collision avoidance computer **512** has processing capabilities and memory suitable to store and execute computer-executable instructions. In one embodiment, collision avoidance computer **512** includes one or more processors **514** and memory **516.**

Memory **516** may include volatile and nonvolatile memory, removable and non-removable media implemented in any method or technology for storage of information, such as computer-readable instructions, data structures, program modules, or other data. Such memory includes, but is not limited to, random access memory (RAM), read-only memory (ROM), electrically erasable programmable read-only memory (EEPROM), flash memory or other memory technology, compact disc, read-only memory (CD-ROM), digital versatile disks (DVD) or other optical storage, magnetic cassettes, magnetic tape, magnetic disk storage or other magnetic storage devices, redundant array of independent disks (RAID) storage systems, or any other medium which can be used to store the desired information and which can be accessed by a computer system.

Memory **516** contains modules that enable collision avoidance computer **512** to perform various functions. These modules may include autopilot interface module **518,** database interface module **520,** flight director interface module **522,** collision avoidance module **524,** command integration module **526,** traffic sensor interface module **528,** and database **530.**

Collision avoidance module **524** and a set of the other modules in memory **516** may be used to implement separation management module **112** in **Figure 1.** Further, autopilot interface module **518,** database interface module **520,** flight director interface module **522,** collision avoidance module **524,** command integration module **526,** traffic sensor interface module **528,** and database **530** may be implemented as software and/or computer-executable instructions that are executed by the one or more processors **514** to perform the functions as described below.

Autopilot interface module **518** is configured to enable collision avoidance computer **512** to communicate with autopilot **506.** The communication may be established over an electrical connection, an optical connection, and the like. In these illustrative examples, autopilot interface module **518** may be configured to enable autopilot **506** to perform collision avoidance under the direction of collision avoidance computer **512.**

Database interface module **520** enables the reading of data from and writing of data to database **530.** In these illustrative examples, database interface module **520** may be activated by the other modules in memory **516,** as further described below. Database **530** may be configured to store information that may be used to maintain the aircraft on various flight paths as well as avoid collisions.

For instance, database **530** may contain trajectory and speed laws. The trajectory and speed laws may dictate the performance capabilities and maneuver capabilities of the aircraft. Moreover, database **530** may also store aircraft separation limits and aircraft response limits.

The aircraft separation limits may be used to define a separation perimeter, such as separation perimeter **316** described in **Figure 3**. These stored limits may be used to determine the dimensions and shape of the separation perimeter. For example, the parameters may specify measurements such as diameter, width, length, and height, and/or other measurements for defining the separation perimeter. The aircraft response limits, as further described below, may dictate a maximum desired proximity between the aircraft and other aircraft and the minimum time at which the aircraft is to alter its flight path to mitigate the potential of a collision.

Of course, other information may also be used in determining the shape of the separation perimeter. These factors may include, for example, without limitation, weather conditions, altitude, visibility conditions, wind conditions, terrain over which the aircraft are flying, a number of passengers in the aircraft, and/or other suitable factors.

Flight director interface module **522** may facilitate the communication between flight director **508** and collision avoidance module **524**. Accordingly, flight director interface module **522** may enable flight director **508** to provide a pilot with the necessary steering commands.

Traffic sensor interface module **528** may be configured to provide traffic sensor data from traffic sensors **510** to collision avoidance computer **512**. Collision avoidance module **524** in collision avoidance computer **512** may analyze the traffic sensor data received from traffic sensor interface module **528**. Collision avoidance module **524** may alter the current flight path of the aircraft if the aircraft cannot maintain the desired level of separation between the aircraft and other aircraft along the current flight path.

Command integration module **526** may be configured to use autopilot interface module **518** and flight director interface module **522** to respectively send collision avoidance commands, flight path changes, and/or new flight path information to autopilot **506** and flight director **508.**

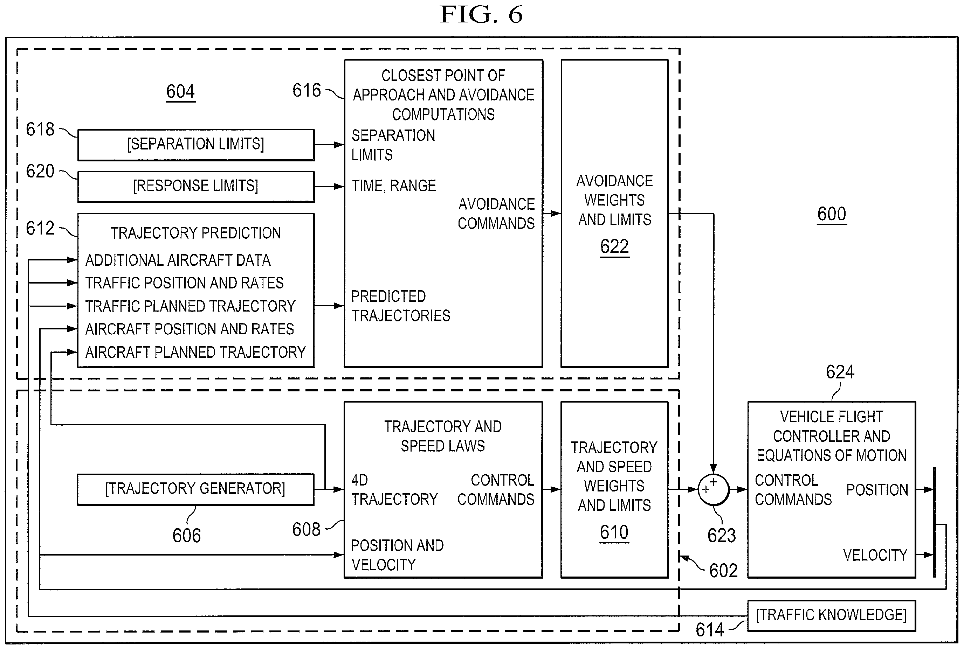

With reference now to **Figure 6,** an illustration of a block diagram of a collision avoidance system is depicted in accordance with an advantageous embodiment. In this illustrative example, system **600** is a collision avoidance system. In particular, system **600** may be used to implement a vehicle-centric collision avoidance system in an aircraft such as, for example, first aircraft **104** in **Figure 1,** first aircraft **302** in **Figure 3,** first aircraft **402** in **Figure 4,** and/or second aircraft **404** in **Figure 4.**

As depicted, system **600** may include flight control module **602** and collision avoidance module **604.** Flight control module **602** is generally configured to maintain an aircraft on predetermined flight paths as the aircraft travels between various destinations. Collision avoidance module **604** is configured to generate avoidance commands that may provide collision avoidance. Collision avoidance module **604** and flight control module **602** may be implemented using software, hardware, or a combination of both.

In this illustrative example, flight control module **602** may include trajectory generator function **606,** control command function **608,** and command modification function **610.** These functions may be carried out by one or more of navigation system **502,** autopilot **506,** and flight director **508** in avionics system **500** in **Figure 5.**

Trajectory generator function **606** is configured to generate flight trajectories for the aircraft based on predetermined waypoints for the aircraft. In these illustrative examples, a flight trajectory for an aircraft is a number of waypoints identified for the aircraft to pass during flight such that the aircraft maintains a desired flight path. Waypoints are positions in airspace. These positions may be positions defined using, for example, a geographical coordinate system.

In these illustrative examples, the number of waypoints identified by the flight trajectory includes future waypoints to be passed and may not include waypoints that have already been passed by the aircraft during flight. In some cases, the flight trajectory may include the number of waypoints predicted to be passed by the aircraft when the aircraft maintains a desired flight path.

In some illustrative examples, the flight trajectory may also indicate the path between each pair of waypoints in number of waypoints to be traveled by the aircraft. In this manner, the flight trajectory may include the desired flight path as well as an identification of the number of waypoints to be passed along the desired flight path.

The flight trajectory may also include the times at which the number of waypoints is to be passed by the aircraft. When the flight trajectory includes time information, the flight trajectory may be referred to as a four-dimensional (4D) flight trajectory. When the flight trajectory does not include the time information, the flight trajectory may be referred to as a three-dimensional flight trajectory.

Control command function **608** is configured to compare a generated flight trajectory with a current position and current velocity of the aircraft. Control command function **608** determines whether the aircraft is deviating and/or will deviate from the generated flight trajectory and whether flight path corrections are needed. Flight path corrections are changes to the current flight path and/or heading that the aircraft is following.

When flight path corrections are needed, control command function **608** may produce control commands that implement the flight path corrections according to trajectory and speed control laws. The control commands may be configured to change throttle settings for the propulsion system of the aircraft and/or manipulate operation of the flight control surfaces of the aircraft.

In some illustrative examples, the control commands produced by control command function **608** may be further processed by command modification function **610** before they are implemented on the propulsion system and respective flight control surfaces. Specifically, command modification function **610** may be configured to implement the control commands as a function of flight conditions using gains, also referred to as weights and/or limits.

For example, command modification function **610** may assign a high weight value to one or more control commands when the aircraft has severely deviated from a flight path. The high weight value may cause the one or more control commands to be expediently implemented to a high degree so as to cause the aircraft to quickly return to the designated flight path.

Conversely, command modification function **610** may assign a low weight value to one or more control commands when the aircraft experiences only a slight deviation from the flight path. In such an instance, the control commands may be gradually implemented such that the return of the aircraft to the designated flight path is more gradual or measured. Further, the control commands may be implemented in a manner that takes into passenger comfort, ride quality, safety factors, and/or other suitable factors.

In these illustrative examples, collision avoidance module **604** may interact with flight control module **602** to alter the flight path of the aircraft during flight to provide collision avoidance when needed. Collision avoidance module **524** in collision avoidance computer **512** in **Figure 5** may be used to implement the functions carried out in collision avoidance module **604**.

As depicted, collision avoidance module **604** of system **600** may issue avoidance commands that compete with the control commands provided by flight control module **602**. In this way, the avoidance commands may alter a flight trajectory and/or flight path of the aircraft to provide collision avoidance. In these illustrative examples, collision avoidance module **604** includes trajectory analysis function **612,** computations function **616,** separation limits **618,** response limits **620,** and avoidance modification function **622.**

Trajectory analysis function **612** may be configured to predict the flight path of the aircraft with respect to the flight paths of other traffic aircraft. Trajectory analysis function **612** may obtain traffic knowledge **614** from traffic sensor **510** via traffic sensor interface module **528** in **Figure 5.** Traffic knowledge **614** may include the position, velocity, heading, heading rate of change, climb rates, descend rates, velocity rate of change, and trajectory of the traffic aircraft.

In other instances, traffic knowledge **614** may also include the flight plans of particular traffic aircraft. A flight plan includes a predetermined flight trajectory for the particular traffic aircraft. In other words, the flight plan may include the predetermined flight path for the particular traffic aircraft and times associated with different waypoints along the predetermined flight path.

For example, if a traffic aircraft has filed a flight plan, trajectory analysis function **612** may obtain the flight plan from a ground source, such as, for example, a flight plan database at a ground-based control station. The flight plan obtained may provide trajectory analysis function **612** with detailed knowledge regarding the positions at which the traffic aircraft will be at particular moments in time.

However, in other illustrative examples, the flight management system (FMS) of a traffic aircraft may be capable of transmitting position and rate data to other aircraft. In these examples, trajectory analysis function **612** may also obtain traffic knowledge **614** directly from the traffic aircraft.

Additionally, trajectory analysis function **612** may acquire the predicted flight path of the aircraft in which system **600** is implemented from trajectory generator function **606.** The aircraft on which system **600** is implemented also may be referred to as the self-aircraft in these illustrative examples.

Once the trajectory analysis function **612** has received trajectory data from the various sources, trajectory analysis function **612** may process the data to determine the desired trajectory information. This desired trajectory information may include the position of the self-aircraft; the rates of the self-aircraft; the planned trajectory of the self-aircraft; the position of each traffic aircraft; the rates of each traffic aircraft; and the planned trajectory of each traffic aircraft. As used herein, rates for the self-aircraft and each traffic aircraft may include rates of heading change, climb rates, descend rates, velocity, and rates of velocity change. Rates of velocity change are also referred to as acceleration.

In this manner, trajectory analysis function **612** may predict the expected flight path of each aircraft for which it has been provided with data. Trajectory analysis function **612** may be configured to send the predicted trajectories to computations function **616.**

Computations function **616** may be configured to process the predicted trajectories of the different aircraft and provide avoidance commands to the self-aircraft when a loss of separation has been identified. Specifically, the predicted trajectories of the different aircraft may be used to predict whether any of the traffic aircraft will "breach" a predetermined separation perimeter for the self-aircraft at the closest point of approach between the self-aircraft and each of the traffic aircraft.

For instance, if at least one of the traffic aircraft is predicted to be inside the separation perimeter at the closest point of approach between the traffic aircraft and the self-aircraft, then the separation perimeter is predicted to be "breached". When computations function **616** reaches such a prediction, computations function **616** may be configured to issue avoidance commands.

These avoidance commands may preemptively alter the flight path of the self-aircraft such that the separation perimeter is not "breached" at the predicted closest point of approach. In this manner, computations function **616** generates the avoidance commands needed to provide the desired level of separation between the aircraft and other aircraft. Further, a collision avoidance module similar to collision avoidance module **604** may be present on each traffic aircraft and may issue avoidance commands to each traffic aircraft when necessary.

In these depicted examples, computations function **616** uses separation limits **618** to determine the dimensions of the separation perimeter for the aircraft. In one illustrative example, separation limits **618** may define a minimum separation distance that extends in all directions. In this manner, the separation perimeter may be in the form of a sphere. For example, a separation perimeter may be established based on the separation distance of one mile in all directions. In other words, a traffic aircraft is considered to have "breached" the separation perimeter for the self-aircraft if the traffic aircraft is predicted to be closer than one mile away from the aircraft at the closest point of approach predicted between the self-aircraft and the traffic aircraft.

In other illustrative examples, separation limits **618** may be configured to provide other separation perimeter shapes. For example, separation limits **618** may define a radius that extends in all longitudinal and latitudinal directions, and a fixed distance in the vertical axis for all points that extend from the longitudinal and latitudinal directions. In this case, separation limits **618** may define a cylindrical space.

Of course, in other illustrative examples, separation limits **618** may be configured to define a variety of other three-dimensional shapes, such as, for example, an ellipsoid, a spheroid, a half sphere, a cube, an octahedron, and/or some other suitable three-dimensional shape. In other words, the three-dimensional shapes may not be symmetrical.

In some cases, uncertainty in the prediction of the closest point of approach may be directionally dependent. In other words, the uncertainty may be different in different directions with respect to the aircraft. As a result, the shapes defined by separation limits **618** may be non-symmetrical when the uncertainty in the prediction of the closest point of approach is different in different directions with respect to the aircraft.

Further, separation limits **618** may define different three-dimensional shapes for the separation perimeter for an aircraft based on different types of aircraft. For example, when the self-aircraft is a particular type of aircraft, the separation perimeter defined for the self-aircraft and a traffic aircraft of a first type may be different from the separation perimeter defined for the self-aircraft and a traffic aircraft of a second type.

As one illustrative example, the three-dimensional shape of a separation perimeter defined by separation limits **618** may be based on the class of self-aircraft and/or the class of the traffic aircraft class. The class of an aircraft may be, for example, a heavy commercial aircraft, a light private aircraft, a jet, a helicopter, and/or some other suitable class of aircraft. The three-dimensional shapes for the separation perimeter also may be defined based on maneuverability of the self-aircraft and/or traffic aircraft, as well as the speed of the self-aircraft and/or traffic aircraft.

Computations function **616** may be further configured to use response limits **620** in the generation of avoidance commands. Response limits **620** may determine the promptness at which the avoidance commands are carried out.

For example, response limits **620** may be established such that when the predicted closest point of approach between the self-aircraft and a traffic aircraft is predicted to occur at a distance from the self-aircraft's current position that is substantially equal to or greater than some selected threshold, computations function **616** may delay the provision of the one or more avoidance commands. Conversely, if the predicted closest point of approach between the self-aircraft and the traffic vehicle is predicted to occur at a distance from the self-aircraft's current position that is less than the selected threshold, computations function **616** may immediately provide the one or more avoidance commands for execution by the self-aircraft.

In some illustrative examples, computations function **616** may be configured to compute the time to closest point of approach ($t_{cpa}$). This time may also be referred to as a time-to-go to the closest point of approach. In these examples, response limits **620** may also include time limitations. For example, if the time to closest point of approach is predicted to occur at a time in the future that is substantially equal to or later than some selected threshold, computations function **616** may delay avoidance command execution.

For example, the time to closest point of approach may be later than the selected threshold by being a time beyond a predetermined time interval. This predetermined time interval may be in any type of units for time increments, such as, for example, seconds, minutes, hours, and/or some other increments for time.

Conversely, the time to closest point of approach is imminent in time. For example, when the time to closest point of approach is predicted to occur at a time earlier than some selected threshold, such as before a predetermined time interval will elapse, computations function **616** may more rapidly provide the avoidance commands for execution. Furthermore if the time to closest point of approach is negative, then the closest point of approach has already occurred and the aircraft are moving away from one another. In this case, the avoidance command may be set to zero.

In this manner, computations function **616** may prioritize the generation of avoidance commands based on the imminence of the potential collision with each of a plurality of traffic aircraft. For example, the computation of time to closest point of approach and the implementation of time limitations in response limits **620** may be suitable for collision avoidance between aircraft with long times-to-go for a closest point of approach. Longer times-to-go for a closest point of approach may be predicted between two aircraft that are flying in formation at close range along parallel paths, trailing one another, or heading on trajectories at a far range from each other with near zero closest point of approach distance.

In these illustrative examples, avoidance modification function **622** may be configured to assign gain, or avoidance weights, to the one or more avoidance commands generated by computations function **616.** Avoidance weights may be used to establish the relative strength of the avoidance and steering commands.

For example, avoidance modification function **622** may contain a low gain for a long range first separation perimeter layer and a high gain for a near range second separation perimeter layer. In this example, the first separation perimeter layer may enable separation using minor path corrections at far range. Also in this example, the second perimeter layer may ensure the ability of the avoidance commands to overcome the normal control commands issued by control command function **608** in flight control module **602** at near range using higher gains.

As a result, avoidance computations function **616** and avoidance modification function **622** may increase the tendency of the self-aircraft to alter its flight path as it closes in on the traffic aircraft. Moreover, it will be appreciated that avoidance modification function **622** may be configured to assign various gains to the avoidance commands for each separation perimeter and each traffic aircraft.

In other illustrative examples, avoidance modification function **622** may be further configured to assign gains that selectively implement a portion of the avoidance commands. For example, avoidance modification function **622** may be configured to assign no weight to an avoidance command component that causes an aircraft to dive when the aircraft is below a predetermined minimum altitude. This may prevent the aircraft from performing undesired flight path alterations. In some illustrative examples, avoidance modification function **622** may be configured to assign substantially zero weight to avoidance command components that turn the aircraft in a particular direction, such as, for example, right or left.

Avoidance modification function **622** may be further configured to constrain the avoidance commands with control limits. For example, avoidance modification function **622** may provide control limits that prevent avoidance commands from being implemented when the deviations from the flight path are negligible. In other examples, both command modification function **610** and avoidance modification function **622** may use control limits to prevent radical movements of the aircraft or command saturation of the flight control system in the aircraft.

Once avoidance modification function **622** has assigned the necessary gains and/or limits to the avoidance commands, the avoidance commands are passed to, for example, command integration module **526** in **Figure 5.** Command integration module **526** may implement the functions performed by integration component **623** and command integration module **624.**

In particular, integration component **623** applies the avoidance commands to the control commands and sends these integrated commands to command integration module **624.** As described above, the control commands are produced by control command function **608** and modified by command modification function **610.**

The avoidance commands generated may include, for example, heading rate change commands, climb or descend rate modification commands, acceleration and deceleration commands, and/or other steering commands such as speed, altitude, and heading alteration commands. In other words, the avoidance commands may be configured to affect computations of thrust and flight control surface settings in command integration module **624.**

In various embodiments, command integration module **624** may implement the avoidance commands so that they compete with the control commands issued by control command function **608** as weighted and limited by command modification function **610.** In this way, collision avoidance module **604** may alter the flight path of an aircraft when collision avoidance module **604** predicts that a "breach" of the separation perimeter is expected.

Additionally, command integration module **624** may also provide position and rate readings back to the control command function **608,** and trajectory analysis function **612.** Further, the position and velocity readings may be passed back to autopilot **506,** flight director **508,** and/or some other system in avionics system **500.** In turn, control command function **608** may use the feedback position and velocity readings to generate further control commands in the same process as described above. Likewise, trajectory analysis function **612** may use the feedback position and velocity readings to continuously update its flight trajectory predictions.

It will be appreciated that collision avoidance module **604** may be configured to continuously monitor the trajectories of the self-aircraft and the traffic aircraft and predict future "breaches" of the separation perimeter by the closest point of approach between the aircraft and other aircraft. This continuous monitoring may ensure that the flight path of the aircraft is altered each time a loss of separation is predicted.

However, collision avoidance module **604** may terminate the output of the avoidance commands when the trajectories of the aircraft and the traffic aircraft indicate that the separation perimeter is no longer being breached by the closest point of approach. In this manner, small flight path alterations may be continuously made to mitigate potential risks of collisions. In some illustrative examples, collision avoidance module **604** may generate the avoidance commands even when a pilot is in control of the aircraft.

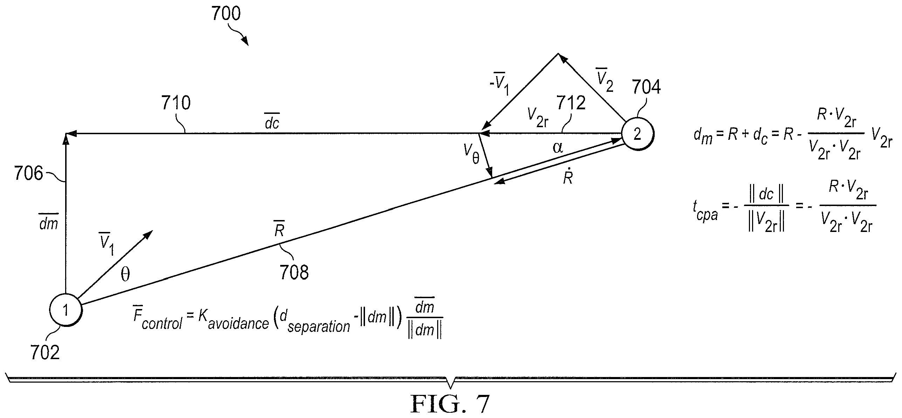

With reference now to **Figure 7,** an illustration of equations for predicting a closest point of approach between two aircraft is depicted in accordance with an advantageous embodiment. In particular, examples of equations for predicting a closest point of approach between first aircraft **702** and second aircraft **704** are depicted. These equations are an example of one implementation for predicting closest point of approach **121** between first aircraft **104** and second aircraft **105** in **Figure 1**. Moreover, **Figure 7** also illustrates the generation of avoidance commands.

As shown in **Figure 7,** assuming that first aircraft **702** and second aircraft **704** continue along straight paths with constant velocities, the closest point of approach between first aircraft **702** and second aircraft **704** may be represented by the equation:

$$\overline{d}_m = \overline{R} + \overline{d}_c = \overline{R} - \frac{\overline{R} \cdot \overline{V}_{2r}}{\overline{V}_{2r} \cdot \overline{V}_{2r}} \overline{V}_{2r} \qquad (5)$$

wherein $\overline{d}_m$ is vector **706** for the closest point of approach vector, $\overline{R}$ is vector **708** for the current range between first aircraft **702** and second aircraft **704**, $\overline{d}_c$, is vector **710** for the predicted distance traveled by second aircraft **704** relative to first aircraft **702** between the current time and the time to the closest point of approach, and $\overline{V}_{2r}$ is vector **712** for the velocity of second aircraft **704** relative to first aircraft **702**.

Furthermore, the time at the closest point of approach may be represented by the equation:

$$t_{cpa} = -\frac{\left\|\overline{d}_c\right\|}{\left\|\overline{V}_{2r}\right\|} = -\frac{\overline{R} \cdot \overline{V}_{2r}}{\overline{V}_{2r} \cdot \overline{V}_{2r}} \quad , \qquad (6)$$

where $t_{cpa}$ is the time at the closest point of approach and $\dfrac{\left\|\overline{d}_c\right\|}{\left\|\overline{V}_{2r}\right\|}$ is the norm of vector **710** for the relative distance predicted to be traveled, $d_c$, between first aircraft **702** and second aircraft **704** over the norm of the vector for the velocity, $\overline{V}_{2r}$, of second aircraft **704** relative to first aircraft **702.**

The control avoidance control law for the generation of a vehicle-centric avoidance command, $\overline{F}_{control}$, may be represented by the equation:

$$\overline{F}_{control} = -\sum_{1}^{n} \sum_{1}^{p} K_{p,n} \cdot \overline{C}_{p,n} \qquad (7)$$

where

$$\overline{C}_{p,n} = Cx_{p,n} \cdot \vec{i}_x + Cy_{p,n} \cdot \vec{i}_y + Cz_{p,n} \cdot \vec{i}_z \qquad (8)$$

and wherein p represents the number of separation perimeter layers, n represents the number of traffic aircraft used in the generation of an avoidance command.

Additionally, $K_{p,n}$ may be the control gains applied to each respective control direction $\left(\vec{i}_x, \vec{i}_y, \vec{i}_z\right)$ for each respective traffic aircraft n under evaluation by the self-aircraft and for any of a number of respective separation perimeter layers $p$. Additionally, $\overline{C}_{p,n}$ comprises the corresponding collision avoidance command components used in the generation of one or more avoidance commands.

According to various embodiments, $\overline{C}_{p,n}$ may be selected as follows:

$$\overline{C}_{p,n} = \left(d_p - \left\|\overline{d}m_n\right\|\right)\frac{\overline{d}m_n}{\left\|\overline{d}m_n\right\|} \qquad (9)$$

where $d_p$ is the desired separation distance for each separation perimeter layer evaluated, and which may be measured along the closest point of approach (CPA) distance vector $\overline{dm}_n$.

If the control gains are equal in each control direction and the same for each traffic aircraft then a single avoidance gain may be defined as follows:

$$K_{p,n} = k_{avoidance}, \quad for \quad all \quad (p,n) \qquad (10)$$

Thus, in this example, the avoidance command may reduce to:

$$\overline{F}_{control} = -k_{avoidance} \sum_1^n \sum_1^p \left( d_p - \left\| \overline{d}m_n \right\| \right) \frac{\overline{d}m_n}{\left\| \overline{d}m_n \right\|} \qquad (11)$$

Further by example, if there is only one traffic aircraft under evaluation, that is, n=l, and only one separation perimeter is evaluated, $p$=1, then the avoidance command, $\overline{F}_{control}$, may reduce to:

$$\overline{F}_{control} = -k_{avoidance} \left( d_1 - \left\| \overline{d}m_1 \right\| \right) \frac{\overline{d}m_1}{\left\| \overline{d}m_1 \right\|} \qquad (12)$$

wherein $k_{avoidance}$ contains the gain or control weight, $d_1$ is the desired separation distance that may constitute the separation perimeter layer, and $\left\| \overline{d}_{m1} \right\|$ is the norm of the vector for the closest point of approach $\overline{dm}$. Further, $\left\| \overline{d}_{m1} \right\|$ is the distance of the closest point of approach.

As shown, the avoidance command, $\overline{F}_{control}$, provides the force or avoidance command along the direction of the closest point of approach, $\overline{dm}$, to increase the closest point of approach, $\overline{dm}$, between first aircraft **702** and second aircraft **704**. Moreover, according to the above equation 8, as the closest point of approach distance $\left\| \overline{d}_m \right\|$ becomes increasingly smaller, the magnitude of the avoidance command, $\overline{F}_{control}$, will proportionally increase.

In other words, in these illustrative examples, computations function **616** from **Figure 6** may increase the magnitude of the avoidance command as the closest point of approach distance decreases. For example, computations function **616** may provide an avoidance command in the form of an acceleration command that increases the thrust of an aircraft.

The avoidance command functions ($\overline{C}_{p,n}$) may be exponential functions, quadratic functions, or other functions that adjust the control commands as the self-aircraft approaches the closest point of approach. In other embodiments, the avoidance command functions may be functions of other parameters and vectors such as relative velocity and range.

According to some embodiments, the exemplary equations illustrated above may be implemented to establish multiple separation perimeter layers. Each separation perimeter layer may be maintained based on a unique set of values, gains, functions, and separation limits. Moreover, separation perimeter layers may be established based on time, distance, rate, and any combination thereof.

For example, a temporal perimeter layer may be established when the time to closest point of approach is less than a specified separation limit. A rate and distance perimeter layer also may be established, for example, when avoidance command initiation is based on both the magnitude of the relative rate and the range between the self-aircraft and any traffic aircraft. Further, the desired separation distance of a separation perimeter may include a set of distances and reference directions $\left( \overline{i}_x, \overline{i}_y, \overline{i}_z \right)$ that establish the separation perimeter shape, wherein each direction may have its own avoidance gain. In this way, it will be appreciated that a plurality of different separation perimeter layers may be respectively established between the self-aircraft and each traffic aircraft.

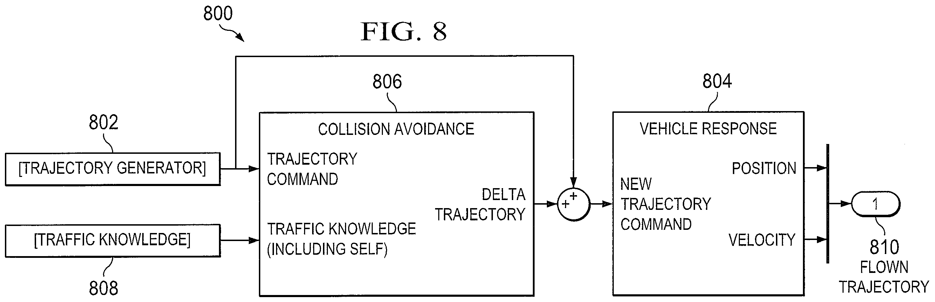

With reference now to **Figure 8,** an illustration of a vehicle-centric avoidance system is depicted in accordance with an advantageous embodiment. In this illustrative example, vehicle-centric collision avoidance system **800** may include a flight control system. The flight control system may be configured to maintain an aircraft on predetermined flight trajectories as the aircraft travels between various destinations.

Specifically, the components of the flight control system may include trajectory generator function **802** and vehicle response function **804**. The vehicle-centric collision system **800** may also include collision avoidance module **806**. Collision avoidance module **806** may be configured to modify the flight trajectories, as provided by trajectory generator function **802** to provide collision avoidance. According to various implementations, the trajectory generator function **802** and/or vehicle response function **804** may be carried out by one or more of navigation system **502,** autopilot **506,** and flight director **508,** as described above in **Figure 5.**

Trajectory generator function **802** is configured to produce predicted flight trajectories for an aircraft. In particular, these flight trajectories may be four-dimensional trajectories. Trajectory generator function **802** uses traffic knowledge **808** to predict the flight trajectories. Vehicle response function **804** may be configured to compare a generated flight trajectory with the current position and velocity of the aircraft to determine any deviation and whether any flight path corrections are needed.

Vehicle response function **804** may produce control commands that implement the generated flight trajectories for the aircraft according to trajectory and speed control laws, other control laws, vehicle dynamics, and/or other suitable parameters. The control commands generated may be configured to change the throttle settings for the aircraft and/or manipulate the flight control surfaces of the aircraft to fly the aircraft along trajectory **810.**

Collision avoidance module **806** may modify the generated flight trajectory for the aircraft, as produced by trajectory generator function **802,** before the flight trajectory is implemented by control commands generated by vehicle response function **804** to fly the aircraft along trajectory **810.** In these illustrative examples, the functions performed by collision avoidance module **806** may be carried out by collision avoidance module **524** described in **Figure 5.**

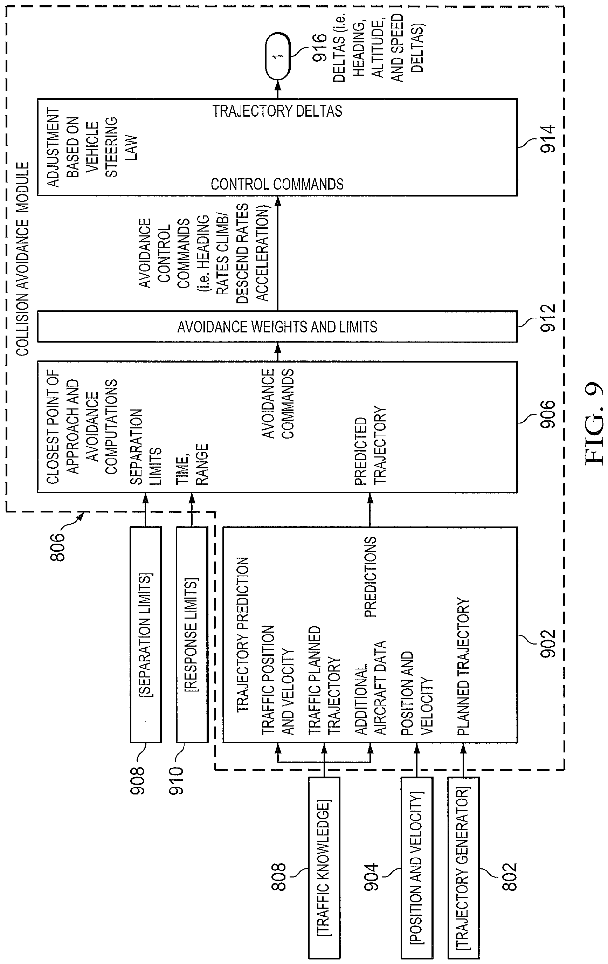

With reference now to **Figure 9,** an illustration of a collision avoidance module is depicted in accordance with an advantageous embodiment. In this illustrative example, the different functions performed by collision avoidance module **806** in **Figure 8** are described in greater detail.

As depicted, collision avoidance module **806** includes trajectory analysis function **902.** Trajectory analysis function **902** may be configured to predict the flight path of the aircraft with respect to the flight paths of other traffic aircraft. Trajectory analysis function **902** may obtain traffic knowledge **816** from traffic sensors **510** via traffic sensor interface module **528** in **Figure 5.**

Traffic knowledge **816** may include the position, velocity, heading, and trajectory of the traffic aircraft. In other instances, traffic knowledge **816** may also include the flight plans or intent of particular traffic aircraft. For example, if a traffic aircraft has filed a flight plan or an updated intention, trajectory analysis function **902** may obtain the flight plan from a central source, such as a flight plan database or from the flight management system on the traffic aircraft using a data link. The flight plan may provide trajectory analysis function **902** with detailed knowledge regarding the positions of the traffic aircraft at particular moments in time.

Additionally, trajectory analysis function **902** may acquire the predicted trajectory of the aircraft from trajectory generator function **802.** Moreover, trajectory analysis function **902** may also acquire position and velocity data **904** for the aircraft from one of autopilot **506** and/or flight director **508** in **Figure 5.**

Once trajectory analysis function **902** has received trajectory, position, and velocity data from the various sources, this function may process the data and determine the desired trajectory information. This trajectory information may include the position and rates of the self-aircraft; the planned trajectory of the self-aircraft; the position and rates of each traffic aircraft; and the planned trajectory of each traffic aircraft. In other words, trajectory analysis function **902** may predict the expected flight trajectory of each aircraft for which it has been provided with data. Moreover, trajectory analysis function **902** may be configured to pass the predicted trajectories to computations function **906.**

Computations function **906** may be configured to process the predicted trajectories of the aircraft and provide aircraft avoidance commands. Specifically, the predicted trajectories of the aircraft may be used to predict whether a traffic aircraft will "breach" the separation perimeter for the self-aircraft at the closest point of approach between the two aircraft.

For instance, if the traffic aircraft is predicted to be inside the separation perimeter at their closest point of approach, then the separation perimeter is predicted to be "breached". When computations function **906** reaches such a prediction, this function may be configured to issue avoidance commands. The avoidance commands may preemptively alter the flight path of the aircraft to avoid the risk of a collision. The avoidance commands generated by computations function **906** may be used in altering flight path **307** for first aircraft **302** to altered flight path **314** in **Figure 3.**

Computations function **906** uses separation limits **908** to determine the separation perimeter for the aircraft. In other words, separation limits **908** may define the dimensions of the separation perimeter. In one implementation, separation limits **908** may define a minimum separation distance that extends in all directions. In such an implementation, the separation perimeter may be in the form of a sphere. In additional implementations, the separation perimeter may be configured with a plurality of layers based on temporal, aircraft velocity, aircraft motion rate, and distance parameters.

Computations function **906** may be further configured to use response limits **910** in the calculation of avoidance commands. Response limits **910** may determine the promptness at which the avoidance commands are carried out. For example, response limits **910** may be established such that when the predicted closest point of approach between the self-aircraft and a traffic aircraft is predicted to occur at a distance from the self-aircraft's current position that is substantially equal to or greater than some selected threshold, computations function **906** may delay the provision of the one or more avoidance commands. Conversely, if the predicted closest point of approach between the self-aircraft and the traffic vehicle is predicted to occur at a distance from the self-aircraft's current position that is less than the selected threshold, computations function **906** may immediately provide the one or more avoidance commands for execution by the self-aircraft.

In other embodiments, response limits **822** may also include time limitations. For example, if the closest point of approach is likely to occur far in the future, such as beyond a predetermined time interval, computations function **906** may delay avoidance command execution. Conversely, if the closest point of approach is imminent in time, such as before a predetermined time interval elapses, computations function **906** may more rapidly provide the avoidance commands for execution.

In this way, the computations function **906** may initiate avoidance based on the imminence of the potential collision with each of a plurality of traffic aircraft. For example, the implementation of time limitations as response limits **910** by computations function **906** may be suitable for collision avoidance between aircraft with long times-to-go for a closest point of approach. Longer times-to-go for a closest point of approach may be predicted between two aircraft that are flying in formation at close range along parallel paths, trailing one another, or heading on trajectories at a far range from each other with near zero closest point of approach distance.

Avoidance modification function **912** may be configured to assign gain, or avoidance weights, to the one or more avoidance commands generated by computations function **906**. The avoidance weights ($K_{p,n}$) may be represented by $K_{avoidance}$ as shown in **Figure 7**. Avoidance weights may be used to determine the strength of the avoidance command.

Avoidance modification function **912** may increase the gain in one or more avoidance commands as the closest point of approach between the self-aircraft and a traffic aircraft decreases. For example, a first set of avoidance computations, limits, and gains may enable separation using low-gain avoidance commands when the predicted breach of a separation perimeter layer is far in range. In another example, a second set of avoidance computations, limits, and gains may provide high-gain avoidance commands to overcome the normal control commands issued by vehicle response function **804** in **Figure 8** when the predicted breach of the separation perimeter layer is near.

In this manner, computations function **906** and avoidance modification function **912** may increase the tendency of the self-aircraft to alter its flight path as it closes in on the traffic aircraft. Moreover, it will be appreciated that avoidance modification function **912** may be configured to assign different gains to other generated avoidance commands based on the specific separation perimeter layer being breached.

In these illustrative examples, trajectory modification function **914** includes adjustment algorithms that are configured to modify the flight trajectories generated by trajectory generator function **802**. Specifically, trajectory modification function **914** generates changes for the flight trajectory, also referred to as trajectory deltas, based on the weighted and limited avoidance commands from avoidance modification function **912**. Trajectory modification function **914** may then integrate the trajectory delta with a generated trajectory to produce a new modified trajectory.

In some illustrative examples, avoidance modification function **912** may output avoidance commands to change heading, heading rate, climb and descend rates, speed, acceleration, and/or deceleration. The avoidance commands are then converted into delta trajectory commands based on the steering law for the aircraft, as well as the desired aircraft response to the steering commands.

For example, the aircraft steering law may be configured to convert heading change into a heading rate command based on a proportional control law with gain K. In such an instance, when a traffic aircraft is predicted to breach a separation perimeter of the self-aircraft, a steering adjustment algorithm of trajectory modification function **914** may produce a heading delta, or change, by dividing a collision avoidance heading rate command by *K*. In this case, the steering law will convert this result back to a heading rate command.

In another illustrative example, when the predetermined trajectory generated by trajectory generator function **802** includes a set of waypoints, trajectory modification function **914** may include an adjustment algorithm that moves the next waypoint of the trajectory based on one or more avoidance commands. In this manner, the desired heading change may be produced to provide collision avoidance in the event a separation perimeter is breached.

Subsequent to the trajectory modification, new modified trajectory **916** may be passed on to vehicle response function **804** in **Figure 8** to be implemented. Vehicle response function **804** may include the steering laws and vehicle response. In this manner, collision avoidance module **806** may provide collision avoidance without the need to modify aircraft control commands, as described in **Figure 4**. In other words, collision avoidance module **806** may be implemented as a separate function outside of the steering and flight control functions for an aircraft, such as outside trajectory generator function **802** and vehicle response function **804**.

It will be appreciated that collision avoidance module **806** may be configured to continuously monitor the trajectories of the self-aircraft and the traffic aircraft and predict future "breaches" of the separation perimeter using the closest point of approach avoidance computations between the aircraft. In response, trajectory modification function **914** may continuously make adjustments to the flight trajectory whenever the "breaches" are predicted to occur to ensure that proper separation between aircraft is maintained.

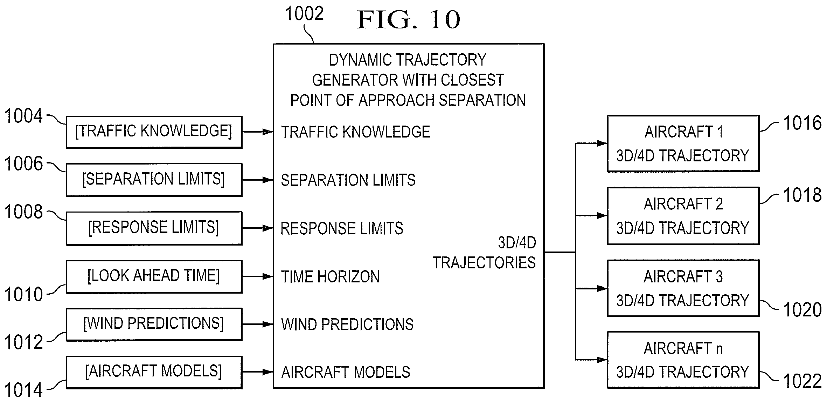

With reference now to **Figure 10,** an illustration of a dynamic trajectory generator is depicted in accordance with an advantageous embodiment. In this illustrative example, dynamic trajectory generator **1002** may be a ground-based trajectory generator configured to provide "deconflicted" flight trajectories for a plurality of aircraft. A deconflicted flight trajectory for an aircraft is a flight trajectory along which no potential breaches of the separation perimeter are predicted to occur. In other words, the aircraft trajectories supplied by dynamic trajectory generator **1002** are configured to maintain desired levels of separation between aircraft at all times.

Specifically, deconflicted trajectories may be generated by running independently optimal but conflicted trajectories through a simulation that contains models of the vehicle dynamics, their respective separation control laws or mechanisms, and wind predictions. The processing of these trajectories by dynamic trajectory generator **1002** provides the deconflicted trajectories.

For example, dynamic trajectory generator **1002** may be configured to receive data that includes traffic knowledge **1004,** separation limits **1006,** response limits **1008,** look ahead time **1010,** wind predictions **1012,** and aircraft models **1014.** In turn, dynamic trajectory generator **1002** may generate a plurality of aircraft flight trajectories based on closest point of approach computations. These flight trajectories may include three-dimensional trajectories, and as well as four-dimensional trajectories that dictate the positions of the aircraft at a particular time.

Traffic knowledge **1004** may include positions and flight trajectories of a plurality of traffic aircraft. In these illustrative examples, traffic knowledge **1004** may include traffic data received from a Traffic Alert and Collision Avoidance System (TCAS), an Automatic Dependent Surveillance (ADS) system, a ground air traffic control (ATC) system, or traffic surveillance sensor systems onboard aircraft, as well as other air traffic detection systems. In other embodiments, traffic knowledge **1004** may include flight trajectories from flight plans, predicted flight trajectories from current aircraft positions and velocities, and other predetermined flight trajectories.

Separation limits **1006** may define the dimensions of separation perimeters for the plurality of aircraft. In one illustrative example, separation limits **1006** may define a minimum separation distance for each aircraft that extends in all directions. In such an implementation, the separation perimeter may be in the form a sphere.

For example, a separation perimeter may be established based on the separation distance of one mile in all directions. In this example, a traffic aircraft is considered to have "breached" a separation perimeter if the traffic aircraft is closer than one mile at the closest point of approach. In other illustrative examples, separation limits **1006** may be configured to provide other separation perimeter shapes, as well as multiple separation layers, as described above.

Response limits **1008** may determine the promptness at which the avoidance commands are carried out. In some illustrative examples, response limits **1008** may include time limitations for the execution of avoidance commands.

Look ahead time **1010** includes specific time horizons for which dynamic trajectory generator **1002** is to generate the flight trajectories for a plurality of aircraft. Wind predictions **1012** include wind data which may be used by dynamic trajectory generator **1002** to plot the flight trajectories. In some illustrative examples, wind predictions **1012** may be obtained from aviation weather reports such as METAR reports, Terminal Aerodrome Forecasts (TAF) from the National Weather Service (NWS), as well as other meteorological report sources.

Aircraft models **1014** may include aircraft performance data. Such performance data may include aircraft steering laws, aircraft control laws, and performance dynamics and capabilities.

Dynamic trajectory generator **1002** may run simulations using traffic knowledge **1004,** separation limits **1006,** response limits **1008,** look ahead time **1010,** wind prediction **1012,** and aircraft models **1014** to generate deconflicted flight trajectories for a plurality of aircraft. For instance, the flight trajectories derived from traffic knowledge **1004** may be used by dynamic trajectory generator **1002** to predict whether at their closest point of approach, a plurality of aircraft are expected to "breach" a predetermined separation perimeter as determined by separation limits **1006.**

Based on these predictions, dynamic trajectory generator **1002** may change the flight trajectories to generate deconflicted trajectories that prevent these separation perimeter breaches. In various implementations, the simulations may be conducted using the exemplary equations shown in **Figure 7.** Moreover, dynamic trajectory generator **1002** may be configured to use response limits **1008** to tailor the trajectory changes. In some implementations, dynamic trajectory generator **1002** may also account for wind predictions **1012.** For example, trajectory changes may be modified using wind predictions **1012** to counter and/or nullify the undesired effects of the wind on the flight trajectories. In further embodiments, dynamic trajectory generator **1002** may also take into consideration aircraft models **1014** to design flight trajectories that conform to the performance capabilities of the aircraft.

Once the deconflicted trajectories have been determined for a plurality of aircraft, dynamic trajectory generator **1002** may use aircraft models **1014** to translate the deconflicted trajectories into control commands for implementation within each of the plurality of aircraft. The control commands may include heading rate change commands, climb or descend rate modification commands, acceleration and deceleration commands, and other steering commands such as speed, altitude, and heading alteration commands.

Alternatively, dynamic trajectory generator **1002** may provide the flight trajectories to the aircraft for implementation by an autopilot or flight management system onboard each aircraft. For example, flight trajectories may be provided to aircraft **1016,** aircraft **1018,** aircraft **1020,** and aircraft **1022.** It will be appreciated that simulations may be continually run by dynamic trajectory generator **1002** out to a specified time horizon using current aircraft state information and proposed trajectories or intentions.

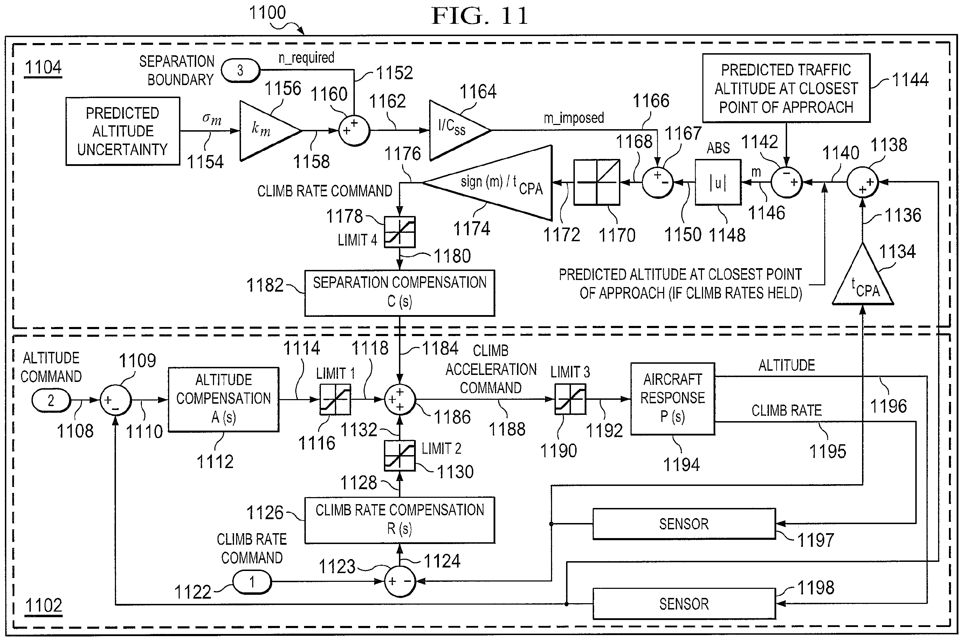

With reference now to **Figure 11,** an illustration of a system for providing collision avoidance to aircraft is depicted in accordance with an advantageous embodiment. In this illustrative example, system **1100** includes flight control module **1102** and collision avoidance module **1104.** Flight control module **1102** may be implemented using one or more of navigation system **502,** autopilot **506,** and/or flight director **508** in **Figure 5.** Further, collision avoidance module **1104** may be implemented using collision avoidance module **524** in **Figure 5,** collision avoidance module **604** in **Figure 6,** and/or collision avoidance module **806** in **Figure 8.**

In this illustrative example, the control logic depicted in flight control module **1102** and collision avoidance module **1104** is used to generate climb acceleration commands to control the altitude of an aircraft in which system **1100** is implemented.

As depicted, flight control module **1102** subtracts measured altitude **1106** from current altitude command **1108** using subtracter **1109** to generate result **1110.** Measured altitude **1106** may be the altitude of the aircraft as detected and/or measured using sensors onboard the aircraft.

Current altitude command **1108** is the altitude for the aircraft that is currently selected by a pilot of the aircraft and/or the autopilot for the aircraft. For example, current altitude command **1108** may be generated by autopilot **506,** flight director **508,** and/or the pilot of the aircraft in which avionics system **500** is implemented.

Result **1110** is sent into altitude compensation component **1112.** Altitude compensation component **1112** is configured to generate climb acceleration command **1114** for the aircraft. In this illustrative example, a climb acceleration command is a command that is sent to the actuators for the flight control surfaces of the aircraft to achieve the desired climb acceleration. Further, in this depicted example, the compensation in altitude compensation component **1112** may be set to a gain, $k_a$.

The desired climb acceleration is the acceleration that causes the aircraft to climb or descend to the altitude indicated by current altitude command **1108.** In this manner, climb acceleration command **1114** is configured to cause the aircraft to climb or descend with a desired acceleration to account for the deviation in measured altitude **1106** and current altitude command **1108.**

First limit function **1116** is applied to climb acceleration command **1114** to generate first limited acceleration command **1118.** First limit function **1116** is configured to limit climb acceleration command **1114.** As one illustrative example, first limit function **1116** may be set to reduce and/or prevent the possibility of an undesired ride quality for the passengers during the flight of the aircraft.

In this illustrative example, measured climb rate **1120** is the climb rate for the aircraft as detected and/or measured using sensors onboard the aircraft. Measured climb rate **1120** is subtracted from current climb rate command **1122** using subtracter **1123** to generate result **1124.**

Current climb rate command **1122** is the climb rate for the aircraft that is currently selected by a pilot of the aircraft and/or the autopilot for the aircraft. For example, current climb rate command **1122** may be generated by autopilot **506,** flight director **508,** and/or the pilot of the aircraft in which avionics system **500** is implemented.

As depicted, result **1124** is sent into climb rate compensation component **1126.** Climb rate compensation component **1126** is configured to generate climb acceleration command **1128** for the aircraft. In this illustrative example, the compensation in climb rate compensation command **1126** is set to a gain, $k_r$. Climb acceleration command **1128** is configured to cause the aircraft to climb or descend with a desired climb acceleration to account for the difference between measured climb rate **1120** and current climb rate command **1122.**

In this illustrative example, second limit function **1130** is applied to climb acceleration command **1128** to generate second limited acceleration command **1132.** Second limit function **1130** is configured to limit climb acceleration command **1114.**

When measured altitude **1106** and measured climb rate **1120** are considered to have unity response magnitude and with the altitude compensation gain set to $k_a$ and the climb rate compensation gain set to $k_r$, the non-limited response to current altitude command **1108** may be simplified as follows:

$$\frac{Altitude}{Altitude\ Command} = \frac{k_a}{s^2 + k_r s + k_a} \tag{13}$$

where altitude is measured altitude **1106** and altitude command is current altitude command **1108.**

In this depicted example, measured climb rate **1120** is also used by altitude climbed component **1134** in collision avoidance module **1104.** Altitude climbed component **1134** uses measured climb rate **1120** and a time to closest point of approach between the aircraft and another aircraft identified as a traffic aircraft to generate altitude distance climbed **1136.** In this illustrative example, the time to closest point of approach is the period of time between the current time and the time at which the closest point of approach is predicted to occur.

Altitude distance climbed **1136** may be the distance in altitude predicted to be climbed during the period of time between the current time at which measured climb rate **1120** is measured and the time of the closest point of approach. In some illustrative examples, altitude distance climbed **1136** may be a negative value. In these cases, the aircraft is predicted to descend by the magnitude of altitude distance climbed.

Adder **1138** in collision avoidance module **1104** is configured to add altitude distance climbed **1136** to measured altitude **1106** to generate predicted altitude **1140**. Predicted altitude **1140** is the altitude predicted for the aircraft at the time of the closest point of approach between the aircraft and the traffic aircraft.

As depicted, subtracter **1142** in collision avoidance module **1104** is configured to subtract predicted traffic altitude **1144** from predicted altitude **1140** to generate miss distance **1146**. Predicted traffic altitude **1144** is the predicted altitude for the traffic aircraft. Predicted traffic altitude **1144** may be based on the flight plan obtained for the traffic aircraft, tracking data, sensor data, information received form a traffic collision avoidance system, shared data from the traffic aircraft, and/or other suitable information.

Miss distance **1146** is the distance in altitude between the aircraft and the traffic aircraft predicted at the time of the closest point of approach. When miss distance **1146** is positive in this example, the traffic aircraft may be below the aircraft. When miss distance **1146** is negative, the traffic aircraft may be above the aircraft.

Absolute value component **1148** is configured to generate absolute miss distance **1150** using miss distance **1146**. Absolute miss distance **1150** is the absolute value of miss distance **1146** in this illustrative example.

In this illustrative example, collision avoidance module **1104** is configured to determine whether miss distance **1146** provides the desired level of separation. In particular, the desired level of separation is an imposed level of separation, such as imposed level of separation **140** in **Figure 1.** In other words, collision avoidance module **1104** determines whether miss distance **1146** is substantially equal to at least the distance that provides the imposed level of separation.

As depicted, collision avoidance module **1104** uses required distance **1152** and uncertainty **1154** to identify the distance for the imposed level of separation. Uncertainty **1154** is an estimate for the uncertainty present in the computation of predicted altitude **1140** for the time of the closest point of approach that is predicted.

Collision avoidance module **1104** applies gain **1156** to uncertainty **1154** to generate result **1158**. Result **1158** is added to required distance **1152** using adder **1160** to generate safe distance **1162**. Safe distance **1162** is then divided by a steady state response gain in steady state component **1164** to generate imposed distance **1166**. Imposed distance **1166** is the distance that defines the boundary for the imposed level of separation that is desired.

In this depicted example, the steady state response gain is defined as follows:

$$C = \frac{K_p s + K_I \left(1 + b K_p\right)}{s + b K_I} \text{, where} \tag{14}$$

$$\lim_{s \to 0}(C) = \frac{1}{b} + K_p \text{, and} \tag{15}$$

where C is the steady state response gain, Kp is a proportional gain, $K_I$ is an integral gain, b is an integral leak gain, and s is a complex varaiable.

In this illustrative example, collision avoidance module **1104** subtracts absolute miss distance **1150** from imposed distance **1166** using subtracter **1167** to generate distance result **1168**. Collision avoidance module **1104** uses function **1170** to process distance result **1168**.

In particular, function **1170** generates recover distance **1172** based on whether distance result **1168** is greater than zero. Recover distance **1172** is the distance still needed to provide the desired level of separation. When distance result **1168** is substantially equal to zero or less than zero, recover distance **1172** may be a zero or null value. In other words, when distance result **1168** is substantially equal to zero or less than zero, the desired level of separation is present.

If distance result **1168** is greater than zero, recover distance **1172** is a positive value equal to the distance needed to recover the desired level of separation. In other words, when distance result **1168** is greater than zero, the desired level of separation is predicted to be absent at the time of the closest point of approach.

In this illustrative example, recover distance **1172** is processed using climb rate command component **1174**. Climb rate command component **1174** applies the sign of missed distance **1146** to recover distance **1172** and then divides this value by the time to closest point of approach for the two aircraft to generate climb rate command **1176**.

A positive value for climb rate command **1176** indicates that the aircraft needs to climb to have the desired level of separation. A negative value for climb rate command **1176** indicates that the aircraft needs to descent to have the desired level of separation. A zero value for climb rate command **1176** indicates that the desired level of separation is already present.

As depicted, fourth limit function **1178** is applied to climb rate command **1176** to generate limited climb rate command **1180.** Fourth limit function **1178** is configured to ensure that the command does not cause the aircraft to climb or descend more quickly than desired.

In one illustrative example, when loss of separation is predicted, fourth limit function **1178** may be set to a value that is greater than first limit function **1116** and/or third limit function **1190** to yield a steady state command for limited climb rate command **1180.**

Limited climb rate command **1180** is sent into separation compensation component **1182.** Separation compensation component **1182** is configured to generate climb acceleration command **1184** using limited climb rate command **1180.** Climb acceleration command **1184** is configured to take into account whether the desired level of separation is predicted to be present at the time of the closest point of approach.

In this depicted example, fourth limit function **1178** may be set such that climb acceleration command **1184** is greater than climb acceleration command **1114.** In this manner, the aircraft may be controlled to maneuver away from the current path despite current altitude command **1108.**

In this illustrative example, climb acceleration command **1184,** climb acceleration command **1114,** and climb acceleration command **1128** are added using adder **1186** to generate final climb acceleration command **1188.** Third limit function **1190** is applied to final climb acceleration command **1188** to generate limited final climb acceleration command **1192.** Third limit function **1190** may be set to a value for the maximum safe performance of the aircraft. In other words, third limit function **1190** may limit limited final climb acceleration command **1192** such that limited final climb acceleration command **1192** does not cause the aircraft to maneuver in an undesired manner.

Limited final climb acceleration command **1192** may be sent to, for example, the autopilot of the aircraft and/or a flight management system of the aircraft. In this manner, limited final climb acceleration command is a final control command for the aircraft. These systems may control the actuators of the flight control surfaces of the aircraft using limited final climb acceleration command **1192.**

As depicted, aircraft response component **1194** is the actual response of the aircraft to limited final climb acceleration command **1192.** In this control system, the output of aircraft response component **1194** may be actual climb rate **1195** and actual altitude **1196** of the aircraft. Sensor component **1197** may measure the climb rate of the aircraft to generate measured climb rate **1120.** Sensor component **1198** may measure the altitude of the aircraft to generate measured altitude **1106.**

In this illustrative example, first limit function **1116,** second limit function **1130,** third limit function **1190,** and fourth limit function **1178** may be adjusted to provide the desired value for final climb acceleration command **1188.** In particular, these values may be adjusted to place desired limits on the different climb acceleration commands used to form final climb acceleration command **1188.**

In this manner, system **1100** provides the aircraft with a capability to alter its flight path when the predicted miss distance at the closest point of approach does not provide the desired level of separation between the aircraft and a traffic aircraft.

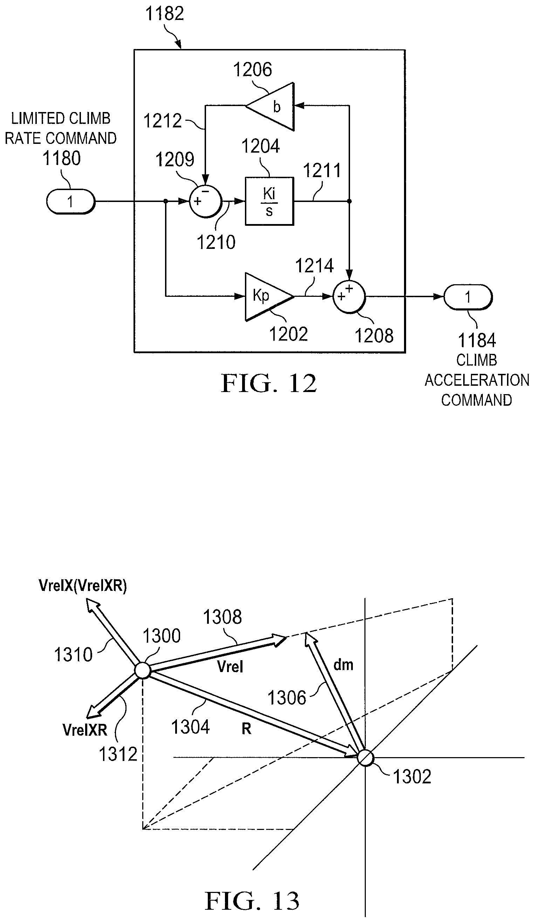

With reference now to **Figure 12,** an illustration of a separation compensation component is depicted in accordance with an advantageous embodiment. In this illustrative example, separation compensation component **1182** from **Figure 11** is depicted in greater detail.

As depicted, separation compensation component **1182** includes proportional gain **1202,** integral gain component **1204,** integral leak gain **1206,** and adder **1208.** In this illustrative example, the output of integral leak gain **1206** is subtracted from limited climb rate command **1180** from **Figure 11** using subtracter **1209** to generate result **1210.** Integral gain component **1204** is applied to result **1210** to generate result **1211.** Integral leak gain **1206** is applied to result **1211** to generate output **1212** that is subtracted from limited climb rate command **1180.**

Further, proportional gain **1202** is applied to limited climb rate command **1180** to generate result **1214.** Result **1211** and result **1214** are added together using adder **1208** to form climb acceleration command **1184,** as described in **Figure 11.**

With system **1100** from **Figure 11** and separation compensation component **1182** in Figures 11 and 12, recover distance **1172** may be integrated with an output rate limited by fourth limit function **1178.** Climb acceleration command **1184** may command the aircraft away from the altitude commanded by current altitude command **1108.** However, climb acceleration command **1184** may compete with climb acceleration command **1114** and overrides climb acceleration command **1114** when climb acceleration command **1114** reaches the limit specified by first limit function **1116.**

Alternatively, the feedback provided by collision avoidance module **1104** may be configured to override climb acceleration command **1114** by setting a gain for climb acceleration command **1114** to zero or limiting climb acceleration command **1114** such that climb acceleration command **1184** generated by collision avoidance module **1104** is allowed to recover the desired level of separation.

In these illustrative examples, the transfer response function of miss distance **1146** to imposed distance **1166** may be given by the following equation:

$$\frac{m}{m_{imposed}} = \frac{C\left(s + \frac{1}{t_{cpa}}\right)}{s^2 + (k_r + C)s + \left(k_a + \frac{C}{t_{cpa}}\right)}. \tag{16}$$

Further, when the altitude compensation is limited, the transfer response function may be:

$$\frac{m}{m_{imposed}} = \frac{C\left(s + \frac{1}{t_{cpa}}\right)}{s^2 + (k_r + C)s + \frac{C}{t_{cpa}}}. \tag{17}$$

When two aircraft are flying in airspace, the time to closest point of approach between the two aircraft may be initially large. As a result, the transfer response function may be approximated by the following equation:

$$\frac{m}{m_{imposed}} = \frac{C}{s + k_r + C} \quad \text{or} \tag{18}$$

$$\frac{m}{m_{imposed}} = \frac{(K_p s + K_I) + bK_I K_p}{\left(s^2 + (k_r + K_p)s + K_I\right) + bK_I(s + K_p + k_r)} \tag{19}$$

In one illustrative example, integral gain, $K_I$, may be set as follows:

$$K_I = k_r K_p \quad , \text{ which may yield} \tag{20}$$

$$\frac{m}{m_{imposed}} = \frac{K_p(s + k_r(1 + bK_p))}{(s + K_p)(s + k_r) + bk_r K_p(s + K_p + k_r)}. \tag{21}$$

If the integral leak gain, b, is set to zero, then the transfer response function may become:

$$\frac{m}{m_{imposed}} = \frac{K_p}{s + K_p}. \tag{22}$$

Using this relationship, the proportional gain, $K_p$ may be set to establish the time constant of the response in maintaining a desired level of separation. For example, in one illustrative example, the integral leak gain, b, may be set as follows:

$$b = \frac{1}{k_r}. \text{ Then} \tag{23}$$

$$\frac{m}{m_{imposed}} = \frac{K_p \left(s + k_r + K_p\right)}{\left(s + K_p\right)\left(s + k_r\right) + K_p \left(s + K_p + k_r\right)} \quad , \tag{24}$$

in which the steady state response gain is as follows:

$$C_{SS} = \lim_{s \to 0} \left(\frac{m}{m_{imposed}}\right) = \frac{1}{1 + \dfrac{k_r}{K_p + k_r}} \quad . \tag{25}$$

In this illustrative example, the proportional gain, $K_p$, may be represented as a factor of $k_r$. In particular,

$$K_p = k k_r \quad , \text{ which yields} \tag{26}$$

$$C_{SS} = \frac{1 + k}{2 + k} \tag{27}$$

where k is a selecetd gain factor for $k_r$.

In this example, the steady state response gain is less than one. As a result, imposed distance **1166** may be set to a value greater than the magnitude of safe distance **1162** when safe distance **1162** is divided by the steady state response gain using steady state component **1164.**

With a larger imposed distance **1166,** the aircraft may be prevented from repeatedly cycling between performing an escape maneuver to alter its current flight path and steering back into the current flight back to maintain its desired flight trajectory. In particular, imposed distance **1166** is set such that the steady state condition may remain within this boundary.

In these illustrative examples, increasing the proportional gain, $K_p$, may reduce the steady state error for collision avoidance module **1104** and may increase the responsiveness of the maneuver to reach a desired level of separation being predicted as absent at the time of the closest point of approach.

Additionally, in these illustrative examples, a number of parameters used in collision avoidance module **1104** may be selected such that the response of the aircraft to limited final climb acceleration command **1192** is the desired response. For example, the value of the time to the closest point of approach may be limited such that the resulting gain of climb rate compensation component **1174** is also limited.

As another example, the proportional gain, $K_p$, the integral gain, $K_l$, and the selecetd gain gactor, k, may be selected such that the aircraft responds to limited final climb acceleration command **1192** in the desired manner. Of course, depending on the implementation, collision avoiadance module **1104** may be designed with values and/or limits for any number of the parameters for the different components within collision avoidance module **1104** such that the aircraft maneuvers as desired.

The illustration of system **1100** in **Figure 11** and separation compensation component **1182** in **Figure 12** are not meant to imply physical or architectural limitations to the manner in which an advantageous embodiment may be implemented. Other components in addition to and/or in place of the ones illustrated may be used. Some components may be unnecessary. Further, although system **1100** has been shown for altitude, compensation in other directions may be implemented in a similar manner.

With reference now to **Figure 13,** an illustration of an encounter between two aircraft is depicted in accordance with an advantageous embodiment. In this illustrative example, aircraft **1300** and traffic aircraft **1302** are flying in airspace.

As depicted, the magnitude of range vector **1304,** R, indicates the current distance between aircraft **1300** and traffic aircraft **1302.** The magnitude of miss distance vector **1306** is the miss distance at the closest point of approach predicted for aircraft **1300** and traffic aircraft **1302.** In other words, the magnitude of miss distance vector **1306** is the distance predicted between aircraft **1300** and traffic aircraft **1302** at the closest point of approach. Further, the magnitude of relative velocity vector **1308,** Vrel, is the speed of aircraft **1300** relative to traffic aircraft **1302.**

In this illustrative example, the direction of relative velocity vector **1308** may be changed to increase the miss distance. For example, aircraft **1300** may maneuver in some combination of the direction of vector **1310,** and the direction of vector **1312,** (VrelXR). These two vectors, vector **1310** and vector **1312,** are orthogonal vectors in this example. Vector **1312** is the cross product vector of relative velocity vector **1308** and range vector **1304,** or Vrel X R. Vector **1310** is the cross product vector of relative velocity vector **1308** and vector **1312,** or Vrel X Vrel X R.

The direction of vector **1310** may be substantially the same as the direction of miss distance vector **1306.** Altering the flight path of aircraft **1300** to provide the desired level of separation by changing the relative velocity of aircraft **1300** in the direction of vector **1310** may require a smaller change in velocity than changing the relative velocity of aircraft **1300** in the direction of vector **1312.**

Further, changing the direction of the relative velocity of aircraft **1300** in the direction of vector **1312** may cause the relative motion of aircraft **1300** to move in a spiral manner around the traffic aircraft **1302** in an undesired manner. In some illustrative examples, the direction of vector **1310** may be in a constrained direction when flying. In these cases, the aircraft may maneuver in the direction of vector **1312** until the constraint has been relieved.

Of course, other factors may be taken into account when selecting a direction for an aircraft maneuver. For example, an aircraft may be capable of changing velocity more quickly in a certain direction as compared to other directions. For example, an aircraft may be more efficiently capable of descending as compared to turning.

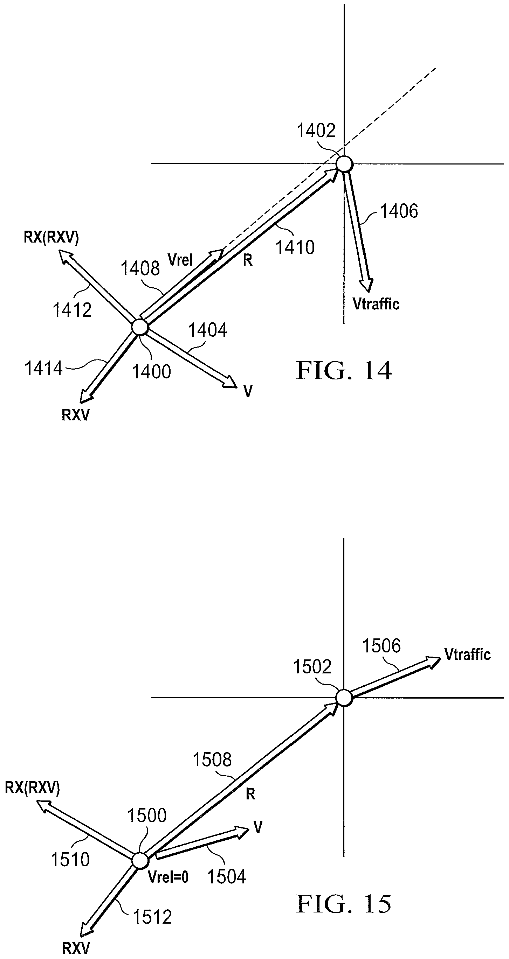

With reference now to **Figure 14,** an illustration of another encounter between two aircraft is depicted in accordance with an advantageous embodiment. In this illustrative example, the encounter between aircraft **1400** and traffic aircraft **1402** is a zero miss distance encounter. In other words, the distance predicted between aircraft **1400** and traffic aircraft **1402** at the time to closest point of approach may be substantially zero.

As depicted, aircraft **1400** has velocity vector **1404,** V. Traffic aircraft **1402** has velocity vector **1406,** $V_{traffic}$. Further, the magnitude of relative velocity vector **1408** is the relative speed of aircraft **1400** relative to traffic aircraft **1402.** The magnitude of range vector **1410,** R, is the current distance between aircraft **1400** and traffic aircraft **1402.**

In this illustrative example, when relative velocity vector **1408** is near zero or when relative velocity vector **1408** and range vector **1410** are substantially aligned or nearly aligned, the cross product vector of relative velocity vector **1408** and range vector **1410,** Vrel X R, and the cross product vector of the relative velocity vector **1408** and the cross product vector of relative velocity vector **1408** and range vector **1410,** Vrel X (Vrel X R), may be substantially at zero or near zero. If Vrel X R is substantially near zero, velocity vector **1404** of aircraft **1400** may be used instead of relative velocity vector **1408** until the Vrel X R is no longer near zero.

To provide the desired level of separation, aircraft **1400** may change its flight path by moving in a direction that is a combination of the direction for vector **1412,** and the direction for vector **1414.** Vector **1414** is the cross product vector of range vector **1410** and velocity vector **1404,** or R X V. Vector **1412** is the cross product of range vector **1410** and vector **1414,** or R X(R X V). In this illustrative example, the preferred direction may be the direction for vector **1412.**

With reference now to **Figure 15,** an illustration of an encounter between two aircraft is depicted in accordance with an advantageous embodiment. In this illustrative example, the encounter between aircraft **1500** and aircraft **1502** is a zero relative speed encounter. In other words, the relative speed between aircraft **1500** and aircraft **1502** is substantially zero.

For example, aircraft **1500** and aircraft **1500** may be traveling along substantially parallel flight paths. As depicted, aircraft **1500** has velocity vector **1504,** V, and aircraft **1502** has velocity vector **1506,** $V_{traffic}$.

In this example, velocity vector **1504** and velocity vector **1506** have substantially the same magnitude and substantially the same direction. In other words, the relative velocity for aircraft **1500** with respect to aircraft **1502** is substantially zero in this illustrative example. As depicted, the magnitude of range vector **1508,** R, is the current distance between aircraft **1500** and aircraft **1502.**

To provide the desired level of separation, aircraft **1500** may change its flight path by moving in a direction that is a combination of the direction for vector **1510,** RX(RXV), and the direction for vector **1512,** RXV. In this illustrative example, the preferred direction may be the direction for vector **1510.** Vector **1512** is the cross product vector of range vector **1508** and velocity vector **1504,** or R X V. Vector **1510** is the cross product of range vector **1508** and vector **1512,** or R X(R X V).

In some cases, the preferred direction may be the sign of the dot product of range vector **1508** and velocity vector **1504** for aircraft **1500** multiplied by velocity vector **1504.** In this manner, aircraft **1500** may pass traffic aircraft **1502** or go behind traffic aircraft **1502.**

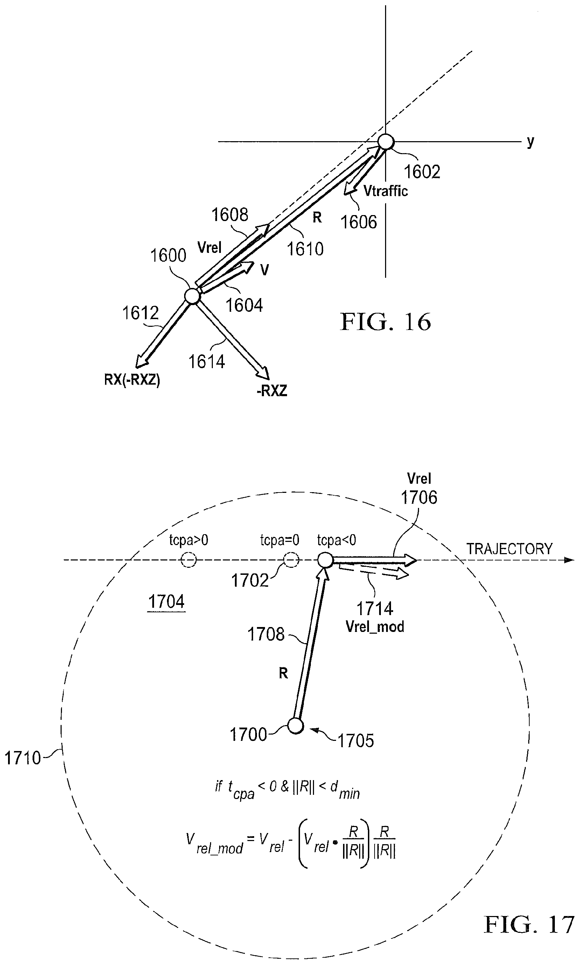

With reference now to **Figure 16,** an illustration of an encounter between two aircraft is depicted in accordance with an advantageous embodiment. In this illustrative example, the encounter between aircraft **1600** and aircraft **1602** may be a head on or overtake encounter. In other words, aircraft **1600** and aircraft **1602** may be flying towards each other.

In this illustrative example, aircraft **1600** has velocity vector **1604,** V, and aircraft **1602** has velocity vector **1606,** $V_{traffic}$. The magnitude of relative velocity vector **1608** is the relative speed of aircraft **1600** with respect to aircraft **1602.** The magnitude of range vector **1610,** R, is the current distance between aircraft **1600** and aircraft **1602.**

With this type of encounter, both the cross product of relative velocity vector **1608** and range vector **1610,** or Vrel X R, and the cross product of range vector **1610** and velocity vector **1604,** or R X V, are substantially zero. As a result, the directions of vector **1612,** R X (-R X Z), and vector **1614,** R X Z, may be used to perform maneuvers to provide a desired level of separation. Vector **1614** is the negative cross product of range vector **1610** and the Z direction. Vector **1612** is the cross product of range vector **1610** and vector **1614.**

With reference now to **Figure 17,** an illustration of two aircraft flying in airspace is depicted in accordance with an advantageous embodiment. In this illustrative example, aircraft **1700** and aircraft **1702** are flying in airspace **1704.** The magnitude of relative velocity vector **1706** is the relative speed of aircraft **1700** relative to aircraft **1702.** The magnitude of range vector **1708** is the current distance between aircraft **1700** and aircraft **1702.**

In this illustrative example, separation perimeter **1710** has been defined for aircraft **1700.** Aircraft **1700** is currently at position **1705** within separation perimeter **1710.** Typically, when, the time to the closest point of approach between aircraft **1700** and aircraft **1702** is negative, indicating that the two aircraft are moving away from each other, the avoidance commands generated to maneuver the aircraft may be zero commands.

However, when aircraft **1702** is within separation perimeter **1710,** it may be desirable to maneuver further away from aircraft **1700.** In particular, aircraft **1702** may use modified relative velocity **1714** vector to compute time to the closest point of approach and other parameters that may be used in generating the collision avoidance commands. Modified relative velocity vector **1714** is selected to keep the time to closest point of approach positive or zero. In other words, modified relative velocity vector **1714** is selected to keep the time to the closest point of approach non-negative. In particular,

$$if \quad t_{cpa} < 0 \quad \& \quad \|R\| < d_{\min} \, , \; \text{then} \qquad (28)$$

$$V_{rel\_mod} = V_{rel} - \left( V_{rel} \bullet \frac{R}{\|R\|} \right) \frac{R}{\|R\|} \, , \qquad (29)$$

where $d_{\min}$ is a minimum distance for a desired level of separation between aircraft **1700** and aircraft **1702,** $V_{rel}$ is relative velocity vector **1706,** R is range vector **1708,** and $V_{rel\_mod}$ is modified relative velocity vector **1714.** In this illustrative example, the minimum distance, $d_m$, defines separation perimeter **1710.**

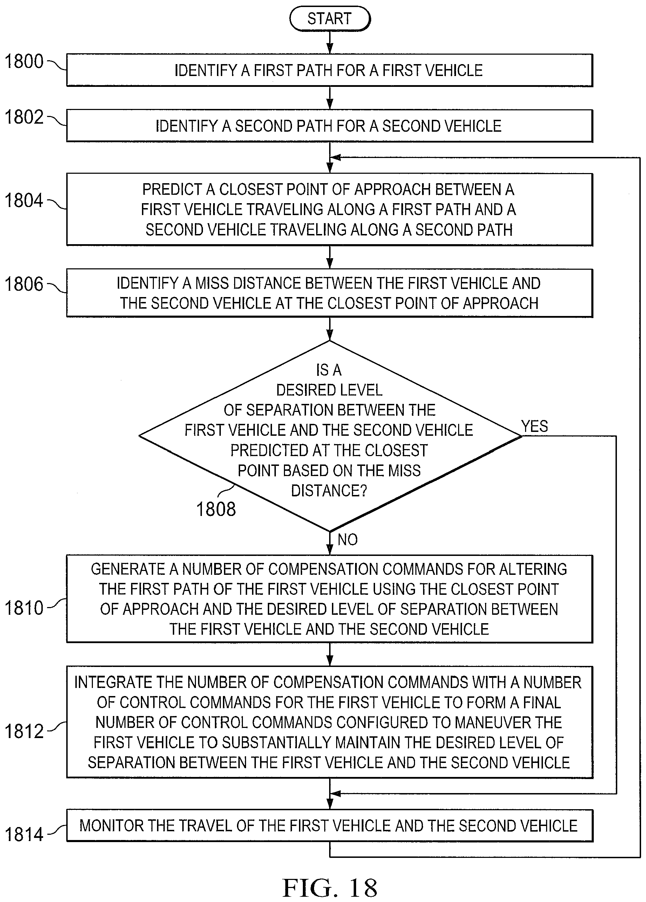

With reference now to **Figure 18,** an illustration of a flowchart of a process for managing vehicles is depicted in accordance with an advantageous embodiment. The process illustrated in **Figure 18** may be implemented using separation management module **112** in **Figure 1.**

The process begins by identifying a first path for a first vehicle (operation **1800**). The process then identifies a second path for a second vehicle (operation **1802**). The first path includes a velocity for the first vehicle. The second path includes a velocity for the second vehicle.

The process then predicts a closest point of approach between a first vehicle traveling along a first path and a second vehicle traveling along a second path (operation **1804**). The closes point of approach between the first vehicle and the second vehicle is predicted to occur when a distance between the first vehicle and the second vehicle has a minimum value if first vehicle continues traveling along the first pat and the second vehicle continues traveling along the second path.

Thereafter, the process identifies a miss distance between the first vehicle and the second vehicle at the closest point of approach (operation **1806**). The process then determines whether a desired level of separation between the first vehicle and the second vehicle is predicted at the closest point of approach based on the miss distance (operation **1808**). The desired level of separation may be selected from one of a required level of separation, a safe level of separation, and an imposed level of separation.

If the desired level of separation is not predicted at the closest point of approach, the process then generates a number of compensation commands for altering the first path of the first vehicle using the closest point of approach and the desired level of separation between the first vehicle and the second vehicle (operation **1810**). Thereafter, the process integrates the number of compensation commands with a number of control commands for the first vehicle to form a final number of control commands configured to maneuver the first vehicle to substantially maintain the desired level of separation between the first vehicle and the second vehicle (operation **1812**). Further, the final number of control commands is configured such that the response of the first vehicle to the final number of control commands is a desired response.

The process monitors the travel of the first vehicle and the second vehicle (operation **1814**), with the process then returning to operation **1804** as described above. With reference again to operation **1808,** if a desired level of separation is predicted at the closest point, the process proceeds to operation **1814.**

The flowcharts and block diagrams in the different depicted embodiments illustrate the architecture, functionality, and operation of some possible implementations of apparatus and methods in an advantageous embodiment. In this regard, each block in the flowchart or block diagrams may represent a module, segment, function, and/or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowcharts or block diagrams.

In some alternative implementations of an advantageous embodiment, the function or functions noted in the block may occur out of the order noted in the figures. For example, in some cases, two blocks shown in succession may be executed substantially concurrently, or the blocks may sometimes be executed in the reverse order, depending upon the functionality involved. Also, other blocks may be added in addition to the illustrated blocks in a flowchart or block diagram.

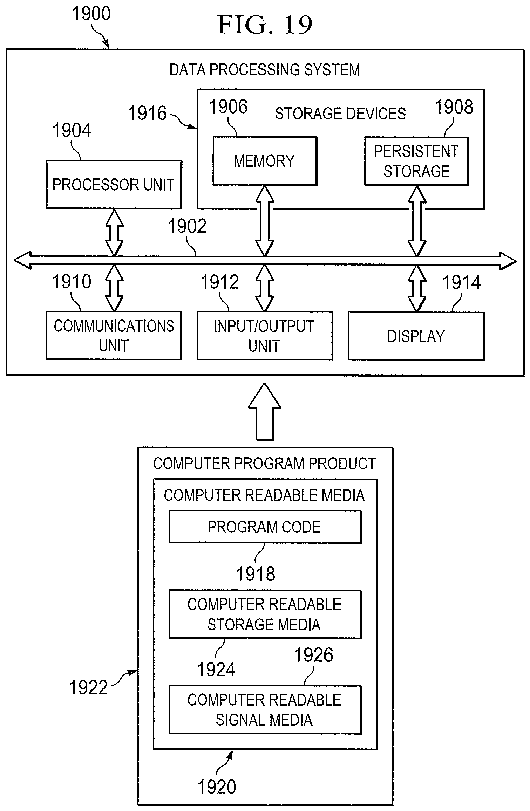

Turning now to **Figure 19,** an illustration of a data processing system is depicted in accordance with an advantageous embodiment. In this illustrative example, data processing system **1900** may be used to implement one or more of number of computers **110** in computer system **108** in **Figure 1.** Further, data processing system **1900** may be used to implement one or more of autopilot **506,** flight director **508,** collision avoidance computer **512,** and/or processors **514** in **Figure 5.**

As depicted, data processing system **1900** includes communications fabric **1902.** Communications fabric **1902** provides communications between processor unit **1904,** memory **1906,** persistent storage **1908,** communications unit **1910,** input/output (I/O) unit **1912,** and display **1914** in data processing system **1900.**

Processor unit **1904** serves to execute instructions for software that may be loaded into memory **1906.** Processor unit **1904** may be a number of processors, a multi-processor core, or some other type of processor, depending on the particular implementation. A number, as used herein with reference to an item, means one or more items. Further, processor unit **1904** may be implemented using a number of heterogeneous processor systems in which a main processor is present with secondary processors on a single chip. As another illustrative example, processor unit **1904** may be a symmetric multi-processor system containing multiple processors of the same type.

Memory **1906** and persistent storage **1908** are examples of storage devices **1916.** A storage device is any piece of hardware that is capable of storing information, such as, for example, without limitation, data, program code in functional form, and/or other suitable information either on a temporary basis and/or a permanent basis. Storage devices **1916** may also be referred to as computer readable storage devices in these examples. Memory **1906,** in these examples, may be, for example, a random access memory or any other suitable volatile or non-volatile storage device. Persistent storage **1908** may take various forms, depending on the particular implementation.

For example, persistent storage **1908** may contain one or more components or devices. For example, persistent storage **1908** may be a hard drive, a flash memory, a rewritable optical disk, a rewritable magnetic tape, or some combination of the above. The media used by persistent storage **1908** also may be removable. For example, a removable hard drive may be used for persistent storage **1908.**

Communications unit **1910,** in these examples, provides for communications with other data processing systems or devices. In these examples, communications unit **1910** is a network interface card. Communications unit **1910** may provide communications through the use of either or both physical and wireless communications links.

Input/output unit **1912** allows for input and output of data with other devices that may be connected to data processing system **1900.** For example, input/output unit **1912** may provide a connection for user input through a keyboard, a mouse, and/or some other suitable input device. Further, input/output unit **1912** may send output to a printer. Display **1914** provides a mechanism to display information to a user.

Instructions for the operating system, applications, and/or programs may be located in storage devices **1916,** which are in communication with processor unit **1904** through communications fabric **1902.** In these illustrative examples, the instructions are in a functional form on persistent storage **1908.** These instructions may be loaded into memory **1906** for execution by processor unit **1904.** The processes of the different embodiments may be performed by processor unit **1904** using computer implemented instructions, which may be located in a memory, such as memory **1906.**

These instructions are referred to as program code, computer usable program code, or computer readable program code that may be read and executed by a processor in processor unit **1904.** The program code in the different embodiments may be embodied on different physical or computer readable storage media, such as memory **1906** or persistent storage **1908.**

Program code **1918** is located in a functional form on computer readable media **1920** that is selectively removable and may be loaded onto or transferred to data processing system **1900** for execution by processor unit **1904.** Program code **1918** and computer readable media **1920** form computer program product **1922** in these examples. In one example, computer readable media **1920** may be computer readable storage media **1924** or computer readable signal media **1926.** Computer readable storage media **1924** may include, for example, an optical or magnetic disk that is inserted or placed into a drive or other device that is part of persistent storage **1908** for transfer onto a storage device, such as a hard drive, that is part of persistent storage **1908.** Computer readable storage media **1924** also may take the form of a persistent storage, such as a hard drive, a thumb drive, or a flash memory, that is connected to data processing system **1900.** In some instances, computer readable storage media **1924** may not be removable from data processing system **1900.** In these examples, computer readable storage media **1924** is a physical or tangible storage device used to store program code **1918** rather than a medium that propagates or transmits program code **1918.** Computer readable storage media **1924** is also referred to as a computer readable tangible storage device or a computer readable physical storage device. In other words, computer readable storage media **1924** is a media that can be touched by a person.

Alternatively, program code **1918** may be transferred to data processing system **1900** using computer readable signal media **1926.** Computer readable signal media **1926** may be, for example, a propagated data signal containing program code **1918.** For example, computer readable signal media **1926** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some advantageous embodiments, program code **1918** may be downloaded over a network to persistent storage **1908** from another device or data processing system through computer readable signal media **1926** for use within data processing system **1900.** For instance, program code stored in a computer readable storage medium in a server data processing system may be downloaded over a network from the server to data processing system **1900.** The data processing system providing program code **1918** may be a server computer, a client computer, or some other device capable of storing and transmitting program code **1918.**

The different components illustrated for data processing system **1900** are not meant to provide architectural limitations to the manner in which different embodiments may be implemented. The different advantageous embodiments may be implemented in a data processing system including components in addition to or in place of those illustrated for data processing system **1900.** Other components shown in **Figure 19** can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

In another illustrative example, processor unit **1904** may take the form of a hardware unit that has circuits that are manufactured or configured for a particular use. This type of hardware may perform operations without needing program code to be loaded into a memory from a storage device to be configured to perform the operations.

For example, when processor unit **1904** takes the form of a hardware unit, processor unit **1904** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a field programmable logic array, a field programmable gate array, and other suitable hardware devices. With this type of implementation, program code **1918** may be omitted because the processes for the different embodiments are implemented in a hardware unit.

In still another illustrative example, processor unit **1904** may be implemented using a combination of processors found in computers and hardware units. Processor unit **1904** may have a number of hardware units and a number of processors are configured to run program code **1918.** With this depicted example, some of the processes may be implemented in the number of hardware units, while other processes may be implemented in the number of processors.

In another example, a bus system may be used to implement communications fabric **1902** and may be comprised of one or more buses, such as a system bus or an input/output bus. Of course, the bus system may be implemented using any suitable type of architecture that provides for a transfer of data between different components or devices attached to the bus system.

Additionally, a communications unit may include a number of more devices that transmit data, receive data, or transmit and receive data. A communications unit may be, for example, a modem or a network adapter, two network adapters, or some combination thereof. Further, a memory may be, for example, memory **1906,** or a cache, such as found in an interface and memory controller hub that may be present in communications fabric **1902.**

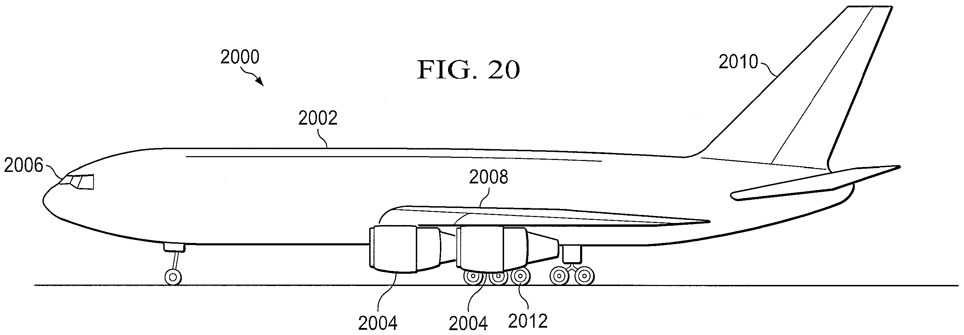

With reference now to **Figure 20,** an illustration of a side elevation view of an aircraft is depicted in accordance with an advantageous embodiment. In this illustrative example, aircraft **2000** is an example of one implementation for first aircraft **104** in **Figure 1,** second aircraft **105** in **Figure 1,** first aircraft **302** in **Figure 3,** second aircraft **304** in **Figure 3,** first aircraft **402** in **Figure 4,** and/or second aircraft **404** in **Figure 4.**

As depicted, aircraft **2000** includes one or more propulsion units **2004** coupled to fuselage **2002,** cockpit **2006** in fuselage **2002,** wing assemblies **2008,** tail assembly **2010,** landing assembly **2012,** a control system (not shown), and other suitable types of systems that enable proper operation of aircraft **2000.** At least one component of a vehicle-centric collision avoidance system may be located within fuselage **2002.** However, components of the collision avoidance system may be distributed throughout the various portions of aircraft **2000.**

As illustrated in the above text and figures, a system is disclosed including a separation management module 112 configured to predict a closest point of approach 121 between a first vehicle traveling along a first path 116 and a second vehicle traveling along a second path 118 using the first path 116 and the second path 118; and generate a number of compensation commands 130 for altering the first path 116 of the first vehicle using the closest point of approach 121 and a desired level of separation 106 between the first vehicle and the second vehicle.

Furthermore, the system may integrate the number of compensation commands 130 with a number of control commands 133 for the first vehicle to form a final number of control commands 143 configured to maneuver the first vehicle to substantially maintain the desired level of separation 106 between the first vehicle and the second vehicle, wherein a response of the first vehicle to the final number of control commands 143 is a desired response 145.

In addition, the system may be further configured to generate the number of compensation commands 130, the separation management module 112 is configured to generate the number of compensation commands 130 for altering the first path 116 of the first vehicle using the closest point of approach 121, the desired level of separation 106 between the first vehicle and the second vehicle, and the time 120 to the closest point of approach 121.

In one variant, the system may include the first vehicle is a first aircraft 104 and the second vehicle is a second aircraft 105 and further including: a flight control module 602, wherein the flight control module 602 is configured to generate the number of control commands 133 and apply a first set of limit functions to the number of control commands 133 and the separation management module 112 is configured to apply a second set of limit functions to the number of compensation commands 130, wherein the first set of limit functions and the second set of limit functions are configured to reduce a possibility of the first aircraft 140 flying in an undesired manner.

In yet another alternative, the desired level of separation 106 is selected from one of a required level of separation 136, a safe level of separation 138, and an imposed level of separation 140. The separation management module 112 is configured to generate the number of compensation commands 130 using a number of parameters selected such that the response of the first vehicle to the final number of control commands 143 is the desired response 145. The desired response 145 includes at least one of a desired ride quality, a desired level of passenger comfort, a desired range of acceleration, a desired response time, and a desired turning rate.

Thus, the different advantageous embodiments provide a method and apparatus for managing separation between vehicles. In one advantageous embodiment, a method for managing separation between vehicles is provided. A closest point of approach between a first vehicle traveling along a first path and a second vehicle traveling along a second path is predicted. A number of compensation commands for altering the first path of the first vehicle are generated using the closest point of approach and a desired level of separation between the first vehicle and the second vehicle. The number of compensation commands is integrated with a number of control commands for the first vehicle to form a final number of control commands configured to maneuver the first vehicle to substantially maintain the desired level of separation between the first vehicle and the second vehicle. A response of the first vehicle to the final number of control commands is a desired response.

Embodiments of systems and methods in accordance with the present disclosure may provide significant advantages over the prior art. The vehicle-centric collision avoidance systems in accordance with the various embodiments may advantageously alter the flight paths of one or more aircraft based when their predicted closest point of approach (CPA) is expected to breach a predefined separation perimeter. In this way, collision avoidance may be performed without human intervention. Automated collision avoidance may reduce or eliminate the possibility of human error or improperly performed collision avoidance maneuvers. Moreover, the vehicle-centric collision avoidance systems in accordance with the various embodiments may diminish the need for ground air traffic controllers to direct aircraft separation. Such labor savings may make it possible for the air traffic controller to manage a larger number of aircraft than previously possible. Lastly, the vehicle-centric collision avoidance system may also be implemented on unmanned aircraft to enable better control and performance.

**Claims**

1.  A method for managing separation (106) between vehicles (102), the method comprising:

    predicting a closest point of approach (121) between a first vehicle traveling along a first path (116) and a second vehicle traveling along a second path (118);
    generating a number of compensation commands (130) for altering the first path (116) of the first vehicle using the closest point of approach (121) and a desired level of separation (106) between the first vehicle and the second vehicle; and
    integrating the number of compensation commands (130) with a number of control commands (133) for the first vehicle to form a final number of control commands (143) configured to maneuver the first vehicle to substantially maintain the desired level of separation (106) between the first vehicle and the second vehicle, wherein a response of the first vehicle to the final number of control commands (143) is a desired response (145), **characterized in that**:

the number of compensation commands are generated by a separation management module (112) using a number of parameters selected such that the response of a first vehicle to the final number of control commands is the desired response (145), wherein the desired response (145) comprises at least one of a desired ride quality, a desired level of passenger comfort, a desired range of acceleration, a desired response time, and a desired turning rate.

2. The method of claim 1 further comprising:

predicting a time (120) to the closest point of approach (121), wherein the closest point of approach (121) is predicted to occur when a distance (123) between the first vehicle and the second vehicle has a minimum value if the first vehicle continues traveling along the first path (116) and the second vehicle continues traveling along the second path (118).

3. The method of claim 2, wherein the step of predicting the closest point of approach (121) comprises:

predicting the distance (123) between the first vehicle and the second vehicle when the distance (123) has the minimum value if the first vehicle continues traveling along the first path (116) and the second vehicle continues traveling along the second path (118); and
predicting a direction (127) of the second vehicle with respect to the first vehicle when the distance has the minimum value.

4. The method of any of claims 2-3, wherein the step of generating the number of compensation commands (130) comprises:

generating the number of compensation commands (130) for altering the first path (116) of the first vehicle using the closest point of approach (121), the desired level of separation (106) between the first vehicle and the second vehicle, and the time (120) to the closest point of approach (121).

5. The method of any of claims 1-4, wherein the first vehicle is a first aircraft (104) and the second vehicle is a second aircraft (105) and wherein the number of control commands (133) is generated using a flight control module (602) in the first aircraft (104) and further comprising:

applying a first set of limit functions to the number of control commands (133); and
applying a second set of limit functions to the number of compensation commands (130), wherein the first set of limit functions and the second set of limit functions are configured to reduce a possibility of the first aircraft (104) flying in an undesired manner.

6. The method of any of claims 1-5 further comprising:

selecting a number of parameters for generating the number of compensation commands (130), wherein the number of parameters is selected such that the response of the first vehicle to the final number of control commands (143) is the desired response.

7. The method of any of claims 1-6, wherein the desired level of separation (106) is selected from one of a required level of separation (136), a safe level of separation (138), and an imposed level of separation (140).

8. The method of any of claim 1-4 and 6-7, wherein the first vehicle is a first aircraft (104), the second vehicle is a second aircraft (105), the first path (116) is a first flight path, and the second path is a second flight path and further comprising:

maneuvering the first aircraft (104) to alter the first flight path of the first aircraft (104) to form an altered flight path (314) for the first aircraft (104) in response to the final number of control commands (143), wherein the altered flight path (314) provides the desired level of separation (106) at the closest point of approach (121) between the first aircraft (104) and the second aircraft (105).

9. The method of claim 8, wherein the maneuvering step comprises:

changing at least one of a speed, an acceleration, and a direction (127) of travel for the first aircraft (104) to form the altered flight path (314) in response to the final number of control commands (143), wherein the altered flight path (314) provides the desired level of separation (106) at the closest point of approach (121) between the first aircraft (104) and the second aircraft (105).

10. The method of any of claims 1-9, wherein the step of generating the number of compensation commands (130) comprises:

identifying the desired level of separation between the first vehicle and the second vehicle using an uncertainty in a prediction of the closest point of approach.

11. The method any of claims 1-4, 6-7, and 11, wherein the first vehicle and the second vehicle are selected from at least one of an aircraft, an unmanned aerial vehicle, a helicopter, a submarine, a surface ship, a missile, a spacecraft, and a ground vehicle.

12. A system comprising:

a separation management module (112) configured to predict a closest point of approach (121) between a first vehicle traveling along a first path (116) and a second vehicle traveling along a second path (118) using the first path (116) and the second path (118); generate a number of compensation commands (130) for altering the first path (116) of the first vehicle using the closest point of approach (121) and a desired level of separation (106) between the first vehicle and the second vehicle;
and integrate the number of compensation commands (130) with a number of control commands (133) for the first vehicle to form a final number of control commands (143) configured to maneuver the first vehicle to substantially maintain the desired level of separation (106) between the first vehicle and the second vehicle, wherein a response of the first vehicle to the final number of control commands (143) is a desired response (145), **characterized in that**:

the number of compensation commands are generated by the separation management module (112) using a number of parameters selected such that the response of a first vehicle to the final number of control commands is the desired response (145), wherein the desired response (145) comprises at least one of a desired ride quality, a desired level of passenger comfort, a desired range of acceleration, a desired response time, and a desired turning rate.

13. The system of claim 12, wherein the separation management module (112) is further configured to predict a time (120) to the closest point of approach (121), wherein the closest point of approach (121) is predicted to occur when a distance (123) between the first vehicle and the second vehicle has a minimum value if the first vehicle continues traveling along the first path (116) and the second vehicle continues traveling along the second path (118).

14. The system of claim 13, wherein in being configured to predict the closest point of approach (121), the separation management module (112) is configured to predict the distance (123) between the first vehicle and the second vehicle when the distance has the minimum value while the first vehicle travels along the first path (116) and the second vehicle travels along the second path (118); and predict a direction (127) of the second vehicle with respect to the first vehicle when the distance (123) has the minimum value.

**Patentansprüche**

1. Verfahren zum Verwalten einer Trennung (106) zwischen Fahrzeugen (102), wobei das Verfahren aufweist:

Vorhersagen eines nähesten Annäherungspunkts (121) zwischen einem ersten Fahrzeug, das sich entlang eines ersten Wegs (116) fortbewegt, und einem zweiten Fahrzeug, das sich entlang eines zweiten Wegs (118) fortbewegt;
Erzeugen einer Anzahl von Ausgleichsbefehlen (130) zum Abändern des ersten Wegs (116) des ersten Fahrzeugs mittels des nähesten Annäherungspunkts (121) und eines erwünschten Trennungsausmaßes (106) zwischen dem ersten Fahrzeug und dem zweiten Fahrzeug; und
Zusammenführen der Anzahl von Ausgleichsbefehlen (130) mit einer Anzahl von Steuerbefehlen (133) für das erste Fahrzeug, um eine endgültige Anzahl von Steuerbefehlen (143) zu bilden, die zum Manövrieren des ersten Fahrzeugs konfiguriert sind, um das erwünschte Trennungsausmaß (106) zwischen dem ersten Fahrzeug und dem zweiten Fahrzeug im Wesentlichen beizubehalten, wobei eine Antwort des ersten Fahrzeugs auf die endgültige Anzahl von Steuerbefehlen (143) eine erwünschte Antwort (145) ist, **dadurch gekennzeichnet, dass**:

die Anzahl von Ausgleichsbefehlen von einem Trennungsverwaltungsmodul (112) mittels einer Anzahl von Parametern erzeugt wird, die derart ausgewählt sind, dass die Antwort eines ersten Fahrzeugs auf die endgültige Anzahl von Steuerbefehlen die erwünschte Antwort (145) ist, wobei die erwünschte Antwort (145) zumindest eines von einem erwünschten Fahrverhalten, einem erwünschten Ausmaß an Fahrgastkomfort, einem erwünschten Beschleunigungsbereich, einer erwünschten Antwortzeit und einer erwünschten Wendegeschwindigkeit aufweist.

2. Verfahren nach Anspruch 1, ferner aufweisend:

Vorhersagen einer Zeit (120) bis zum nähesten Annäherungspunkt (121), wobei für den nähesten Annäherungspunkt (121) vorhergesagt wird, dass er auftritt, wenn ein Abstand (123) zwischen dem ersten Fahrzeug und dem zweiten Fahrzeug einen Minimalwert hat, falls sich das erste Fahrzeug weiterhin entlang des ersten Wegs (116) fortbewegt und sich das zweite Fahrzeug weiterhin entlang des zweiten Wegs (118) fortbewegt.

3. Verfahren nach Anspruch 2, wobei der Schritt des Vorhersagens des nähesten Annäherungspunkts (121) aufweist:

Vorhersagen des Abstands (123) zwischen dem ersten Fahrzeug und dem zweiten Fahrzeug, wenn der Abstand (123) den Minimalwert hat, falls sich das erste Fahrzeug weiterhin entlang des ersten Wegs (116) fortbewegt und sich das zweite Fahrzeug weiterhin entlang des zweiten Wegs (118) fortbewegt; und
Vorhersagen einer Richtung (127) des zweiten Fahrzeugs in Bezug auf das erste Fahrzeug, wenn der Abstand den Minimalwert hat.

4. Verfahren nach einem der Ansprüche 2-3, wobei der Schritt des Erzeugens der Anzahl von Ausgleichsbefehlen (130) aufweist:

Erzeugen der Anzahl von Ausgleichsbefehlen (130) zum Abändern des ersten Wegs (116) des ersten Fahrzeugs mittels des nähesten Annäherungspunkts (121), des erwünschten Trennungsausmaßes (106) zwischen dem ersten Fahrzeug und dem zweiten Fahrzeug und der Zeit (120) bis zum nähesten Annäherungspunkt (121).

5. Verfahren nach einem der Ansprüche 1-4, wobei das erste Fahrzeug ein erstes Luftfahrzeug (104) ist und das zweite Fahrzeug ein zweites Luftfahrzeug (105) ist, und wobei die Anzahl von Steuerbefehlen (133) mittels eines Flugsteuermoduls (602) im ersten Luftfahrzeug (104) erzeugt wird, und ferner aufweisend:

Anwenden eines ersten Satzes von Begrenzungsfunktionen auf die Anzahl von Steuerbefehlen (133); und
Anwenden eines zweiten Satzes von Begrenzungsfunktionen auf die Anzahl von Ausgleichsbefehlen (130), wobei der erste Satz von Begrenzungsfunktionen und der zweite Satz von Begrenzungsfunktionen dafür konfiguriert sind, eine Möglichkeit des ersten Luftfahrzeugs (104) zum Fliegen auf unerwünschte Weise zu verringern.

6. Verfahren nach einem der Ansprüche 1-5, ferner aufweisend:

Auswählen einer Anzahl von Parametern zum Erzeugen der Anzahl von Ausgleichsbefehlen (130), wobei die Anzahl von Parametern derart ausgewählt ist, dass die Antwort des ersten Fahrzeugs auf die endgültige Anzahl von Steuerbefehlen (143) die erwünschte Antwort ist.

7. Verfahren nach einem der Ansprüche 1-6, wobei das erwünschte Trennungsausmaß (106) aus einem von einem erforderlichen Trennungsausmaß (136), einem sicheren Trennungsausmaß (138) und einem vorgegebenen Trennungsausmaß (140) ausgewählt ist.

8. Verfahren nach einem der Ansprüche 1-4 und 6-7, wobei das erste Fahrzeug ein erstes Luftfahrzeug (104) ist, das zweite Fahrzeug ein zweites Luftfahrzeug (105) ist, der erste Weg (116) ein erster Flugweg ist und der zweite Weg ein zweiter Flugweg ist, und ferner aufweisend:

Manövrieren des ersten Luftfahrzeugs (104) zum Abändern des ersten Flugwegs des ersten Luftfahrzeugs (104), um einen abgeänderten Flugweg (314) für das erste Luftfahrzeug (104) als Antwort auf die endgültige Anzahl von Steuerbefehlen (143) zu bilden, wobei der abgeänderte Flugweg (314) das erwünschte Trennungsausmaß (106) am nähesten Annäherungspunkt (121) zwischen dem ersten Luftfahrzeug (104) und dem zweiten Luftfahrzeug (105) bereitstellt.

9. Verfahren nach Anspruch 8, wobei der Manövrierschritt aufweist:

Ändern von zumindest einem von einer Geschwindigkeit, einer Beschleunigung und einer Richtung (127) der Fortbewegung für das erste Luftfahrzeug (104), um den abgeänderten Flugweg (314) als Antwort auf endgültige Anzahl von Steuerbefehlen (143) zu bilden, wobei der abgeänderte Flugweg (314) das erwünschte Trennungsausmaß (106) am nähesten Annäherungspunkt (121) zwischen dem ersten Luftfahrzeug (104) und dem zweiten Luftfahrzeug (105) bereitstellt.

10. Verfahren nach einem der Ansprüche 1-9, wobei der Schritt des Erzeugens der Anzahl von Ausgleichsbefehlen (130) aufweist:

Identifizieren des erwünschten Trennungsausmaßes zwischen dem ersten Fahrzeug und dem zweiten Fahrzeug mittels einer Unsicherheit in einer Vorhersage des nähesten Annäherungspunkts.

11. Verfahren nach einem der Ansprüche 1-4, 6-7 und 11, wobei das erste Fahrzeug und das zweite Fahrzeug aus zumindest einem von einem Luftfahrzeug, einem unbemannten Luftfahrzeug, einem Helikopter, einem U-Boot, einem Überwasserschiff, einer Rakete, einem Raumfahrzeug und einem Bodenfahrzeug ausgewählt sind.

12. System, aufweisend:

ein Trennungsverwaltungsmodul (112), konfiguriert zum Vorhersagen eines nähesten Annäherungspunkts (121) zwischen einem ersten Fahrzeug, das sich entlang eines ersten Wegs (116) fortbewegt, und einem zweiten Fahrzeug, das sich entlang eines zweiten Wegs (118) fortbewegt, mittels des ersten Wegs (116) und des zweiten Wegs (118); Erzeugen einer Anzahl von Ausgleichsbefehlen (130) zum Abändern des ersten Wegs (116) des ersten Fahrzeugs mittels des nähesten Annäherungspunkts (121) und eines erwünschten Trennungsausmaßes (106) zwischen dem ersten Fahrzeug und dem zweiten Fahrzeug; und Zusammenführen der Anzahl von Ausgleichsbefehlen (130) mit einer Anzahl von Steuerbefehlen (133) für das erste Fahrzeug, um eine endgültige Anzahl von Steuerbefehlen (143) zu bilden, die zum Manövrieren des ersten Fahrzeugs konfiguriert sind, um das erwünschte Trennungsausmaß (106) zwischen dem ersten Fahrzeug und dem zweiten Fahrzeug im Wesentlichen beizubehalten, wobei eine Antwort des ersten Fahrzeugs auf die endgültige Anzahl von Steuerbefehlen (143) eine erwünschte Antwort (145) ist, **dadurch gekennzeichnet, dass**:

die Anzahl von Ausgleichsbefehlen vom Trennungsverwaltungsmodul (112) mittels einer Anzahl von Parametern erzeugt wird, die derart ausgewählt sind, dass die Antwort eines ersten Fahrzeugs auf die endgültige Anzahl von Steuerbefehlen die erwünschte Antwort (145) ist, wobei die erwünschte Antwort (145) zumindest eines von einem erwünschten Fahrverhalten, einem erwünschten Ausmaß an Fahrgastkomfort, einem erwünschten Beschleunigungsbereich, einer erwünschten Antwortzeit und einer erwünschten Wendegeschwindigkeit aufweist.

13. System nach Anspruch 12, wobei das Trennungsverwaltungsmodul (112) ferner konfiguriert ist zum Vorhersagen einer Zeit (120) bis zum nähesten Annäherungspunkt (121), wobei für den nähesten Annäherungspunkt (121) vorhergesagt wird, dass er auftritt, wenn ein Abstand (123) zwischen dem ersten Fahrzeug und dem zweiten Fahrzeug einen Minimalwert hat, falls sich das erste Fahrzeug weiterhin entlang des ersten Wegs (116) fortbewegt und sich das zweite Fahrzeug weiterhin entlang des zweiten Wegs (118) fortbewegt.

14. System nach Anspruch 13, wobei das Trennungsverwaltungsmodul (112) insofern, als es für das Vorhersagen des nähesten Annäherungspunkts (121) konfiguriert ist, dafür konfiguriert ist, den Abstand (123) zwischen dem ersten Fahrzeug und dem zweiten Fahrzeug vorherzusagen, wenn der Abstand den Minimalwert hat, während sich das erste Fahrzeug entlang des ersten Wegs (116) fortbewegt und sich das zweite Fahrzeug entlang des zweiten Wegs (118) fortbewegt; und zum Vorhersagen einer Richtung (127) des zweiten Fahrzeugs in Bezug auf das erste Fahrzeug, wenn der Abstand (123) den Minimalwert hat.

**Revendications**

1. Procédé de gestion de la séparation (106) entre des véhicules (102), le procédé comprenant :

   la prédiction du plus proche point d'approche (121) entre un premier véhicule suivant une première trajectoire (116) et un deuxième véhicule suivant une deuxième trajectoire (118) ;
   la génération d'un certain nombre de commandes de compensation (130) pour modifier la première trajectoire (116) du premier véhicule en utilisation le plus proche point d'approche (121) et un niveau désiré de séparation (106) entre le premier véhicule et le deuxième véhicule ; et
   l'intégration du nombre de commandes de compensation (130) avec un nombre de commandes de contrôle (133) pour le premier véhicule pour former un nombre final de commandes de contrôle (143) conçu pour manoeuvrer le premier véhicule afin de maintenir substantiellement le niveau désiré de séparation (106) entre le premier véhicule et le deuxième véhicule,
   où une réponse du premier véhicule au nombre final de commandes de contrôle (143) est une réponse désirée (145), **caractérisée en ce que** :

   les commandes de compensation sont générées par un module de gestion de séparation (112) utilisant un certain nombre de paramètres choisis de sorte que la réponse du premier véhicule au nombre final de commandes de contrôle soit la réponse désirée (145), la réponse désirée (145) comprenant au moins une parmi une qualité désirée de trajet, un niveau désiré de confort des passagers, une gamme désirée d'accélération, un temps de réponse désiré et une vitesse angulaire de giration désirée.

2. Procédé selon la revendication 1, comprenant en outré :

   la prédiction d'une durée (120) jusqu'au plus proche point d'approche (121) où il est prédit que le plus proche point d'approche (121) survienne quand une distance (123) entre le premier véhicule et le deuxième véhicule aura une valeur minimale si le premier véhicule continue selon la première trajectoire (116) et le deuxième véhicule continue selon la deuxième trajectoire (118).

3. Procédé selon la revendication 2, dans lequel l'étape de prédiction du plus proche point d'approche (121) comprend :

   la prédiction de la distance (123) entre le premier véhicule et le deuxième véhicule quand la distance (123) aura une valeur minimale si le premier véhicule continue selon la première trajectoire (116) et le deuxième véhicule continue selon la deuxième trajectoire (118); et
   la prédiction d'une direction (127) du deuxième véhicule par rapport au premier véhicule quand la distance aura sa valeur minimale.

4. Procédé selon l'une quelconque des revendications 2 ou 3, dans lequel l'étape de génération du nombre de commandes de compensation (130) comprend :

   la génération du nombre de commandes de compensation (130) pour modifier la première trajectoire (116) du premier véhicule en utilisant le plus proche point d'approche (121), le niveau désiré de séparation (106) entre le premier véhicule et le deuxième véhicule, et la durée (120) jusqu'au plus proche point d'approche (121).

5. Procédé selon l'une quelconque des revendications 1 à 4, dans lequel le premier véhicule est un premier avion (104) et le deuxième véhicule est un deuxième avion (105) et dans lequel le nombre de commandes de contrôle (133) est généré en utilisant un module de contrôle de vol (602) dans le premier avion (104), et comprenant en outré :

   l'application d'un premier ensemble de fonctions limites au nombre de commandes de contrôle (133) ; et
   l'application d'un deuxième ensemble de fonctions limites au nombre de commandes de compensation (130), le premier ensemble de fonctions limites et le deuxième ensemble de fonctions limites sont configurés pour réduire la possibilité que le premier avion (104) vole d'une manière non-désirée.

6. Procédé selon l'une quelconque des revendications 1 à 5, comprenant en outre :

   le choix d'un certain nombre de paramètres pour générer le nombre de commandes de compensation (130), le nombre de paramètres étant choisi de telle sorte que la réponse du premier véhicule au nombre final de commandes de contrôle (143) est la réponse désirée.

**7.** Procédé selon l'une quelconque des revendications 1 à 6, dans lequel le niveau désiré de séparation (106) est choisi parmi le niveau requis de séparation (136), un niveau sûr de séparation (138) et un niveau imposé de séparation (140).

**8.** Procédé selon l'une quelconque des revendications 1 à 4 et 6 ou 7, dans lequel le premier véhicule est un premier avion (104), le deuxième véhicule est un deuxième avion (105), la première trajectoire (116) est une première trajectoire de vol, et la deuxième trajectoire est une deuxième trajectoire de vol, et comprenant en outré :

la manoeuvre du premier avion (104) pour modifier la première trajectoire du premier avion (104) afin de former une trajectoire de vol modifiée (314) pour le premier avion (104) en réponse au nombre final de commandes de contrôle (143), où la trajectoire de vol modifiée (314) fournit un niveau désiré de séparation (106) au plus proche point d'approche (121) entre le premier avion (104) et le deuxième avion (105).

**9.** Procédé selon la revendication 8, dans lequel l'étape de manoeuvre comprend :

le changement d'au moins un paramètre parmi la vitesse, l'accélération et la direction (127) de vol pour le premier avion (104) afin de former la trajectoire de vol modifiée (314) en réponse au nombre final de commandes de contrôle (143), où la trajectoire de vol modifiée (314) fournit le niveau désiré de séparation (106) au plus proche point d'approche (121) entre le premier avion (104) et le deuxième avion (105).

**10.** Procédé selon l'une quelconque des revendications 1 à 9, dans lequel l'étape de génération du nombre de commandes de compensation (130) comprend :

l'identification du niveau désiré de séparation entre le premier véhicule et le deuxième véhicule en utilisant une incertitude dans une prédiction du plus proche point d'approche.

**11.** Procédé selon l'une quelconque des revendications 1 à 4, 6 ou 7 et 11, dans lequel le premier véhicule et le deuxième véhicule sont choisis parmi au moins un avion, un véhicule aérien sans pilote, un hélicoptère, un sous-marin, un navire de surface, un missile, un vaisseau spatial et un véhicule terrestre.

**12.** Système comprenant :

un module de gestion de séparation (112) conçu pour prédire un proche point d'approche (121) entre un premier véhicule suivant une première trajectoire (116) et un deuxième véhicule suivant une deuxième trajectoire (118) en utilisant la première trajectoire (116) et la deuxième trajectoire (118) ; générer un certain nombre de commandes de compensation (130) pour modifier la première trajectoire (116) du premier véhicule en utilisant le proche point d'approche (121) et un niveau désiré de séparation (106) entre le premier véhicule et le deuxième véhicule ; et intégrer le nombre de commandes de compensation (130) avec un nombre de commandes de contrôle (133) pour le premier véhicule afin de former un nombre final de commandes de contrôle (143) conçu pour manoeuvrer le premier véhicule afin de maintenir substantiellement le niveau désiré de séparation (106) entre le premier véhicule et le deuxième véhicule, où la réponse du premier véhicule au nombre final des commandes de contrôle (143) est une réponse désirée (145), **caractérisée en ce que** :

le nombre de commandes de compensation est généré par le module de gestion de séparation (112) utilisant un certain nombre de paramètres choisis de sorte que la réponse du premier véhicule au nombre final de commandes de contrôle soit la réponse désirée (145), la réponse désirée (145) comprenant au moins une parmi une qualité désirée de trajet, un niveau désiré de confort des passagers, une gamme désirée d'accélération, un temps de réponse désiré et une vitesse angulaire de giration désirée.

**13.** Système selon la revendication 12, dans lequel le module de gestion de séparation (112) est configuré, en outre, pour prédire une durée (120) jusqu'au plus proche point d'approche (121) où il est prédit que le plus proche point d'approche (121) survienne quand une distance (123) entre le premier véhicule et le deuxième véhicule aura une valeur minimale si le premier véhicule continue selon la première trajectoire (116) et le deuxième véhicule continue selon la deuxième trajectoire (118).

**14.** Système selon la revendication 13 dans lequel, tout en étant conçu pour prédire le plus proche point d'approche (121), le module de gestion de séparation (112) est conçu pour prédire la distance (123) entre le premier véhicule et le deuxième véhicule quand la distance aura sa valeur minimale alors que le premier véhicule suit la première trajectoire (116) et le deuxième véhicule suit la deuxième trajectoire (118) ; et prédire une direction (127) du deuxième véhicule par rapport au premier véhicule quand la distance (123) aura sa valeur minimale.

FIG. 1

100

**VEHICLE MANAGEMENT ENVIRONMENT** 114

SEPARATION 106

102 AIRSPACE

115 RISK OF COLLISION

104 PLURALITY OF VEHICLES 105 SECOND AIRCRAFT

DESIRED RESPONSE 145 FIRST AIRCRAFT 132 SET OF MANEUVERS

108 COMPUTER SYSTEM

110 NUMBER OF COMPUTERS 143

113 111 FLIGHT CONTROL SYSTEM 133 NUMBER OF CONTROL COMMANDS

FINAL NUMBER OF CONTROL COMMANDS

SENSOR SYSTEM

112 SEPARATION MANAGEMENT MODULE 130

FIRST PATH

FIRST VELOCITY

122

SECOND PATH

SECOND VELOCITY

124

NUMBER OF COMPENSATION COMMANDS

CLOSEST POINT OF APPROACH

121 120 123 127

TIME DISTANCE DIRECTION

131 116

NEW PATH

119 118

RELATIVE VELOCITY

125

CURRENT RANGE

126 CURRENT DISTANCE

129 CURRENT DIRECTION

128

DESIRED LEVEL OF SEPARATION 136

REQUIRED LEVEL OF SEPARATION

SAFE LEVEL OF SEPARATION

140 138

IMPOSED LEVEL OF SEPARATION

FIG. 2

FIG. 3

EP 2 555 179 B1

FIG. 4

FIG. 5

# FIG. 6

EP 2 555 179 B1

$$d_m = R + d_c = R - \frac{R \cdot V_{2r}}{V_{2r} \cdot V_{2r}} V_{2r}$$

$$t_{cpa} = -\frac{\|dc\|}{\|V_{2r}\|} = -\frac{R \cdot V_{2r}}{V_{2r} \cdot V_{2r}}$$

$$\overline{F}_{control} = K_{avoidance} \left( d_{separation} - \|dm\| \right) \frac{\overline{dm}}{\|dm\|}$$

FIG. 7

FIG. 8

EP 2 555 179 B1

COLLISION AVOIDANCE MODULE

806

CLOSEST POINT OF
APPROACH AND
AVOIDANCE
COMPUTATIONS

908 — [SEPARATION LIMITS]

SEPARATION
LIMITS

910 — [RESPONSE LIMITS]

TIME,
RANGE

ADJUSTMENT
BASED ON
VEHICLE
STEERING
LAW

AVOIDANCE
CONTROL
COMMANDS
(i.e. HEADING
RATES CLIMB/
DESCEND RATES
ACCELERATION)

TRAJECTORY PREDICTION

808

[TRAFFIC KNOWLEDGE]

TRAFFIC POSITION
AND VELOCITY

TRAFFIC PLANNED
TRAJECTORY

AVOIDANCE
COMMANDS

AVOIDANCE WEIGHTS AND LIMITS

CONTROL COMMANDS

TRAJECTORY DELTAS

1

916

DELTAS (i.e.
HEADING,
ALTITUDE,
AND SPEED
DELTAS)

904

[POSITION AND VELOCITY]

ADDITIONAL
AIRCRAFT DATA

POSITION AND
VELOCITY

PREDICTIONS

PREDICTED
TRAJECTORY

[TRAJECTORY GENERATOR]

PLANNED TRAJECTORY

802

902                    906        912           914

FIG. 9

FIG. 10

DYNAMIC TRAJECTORY
GENERATOR WITH CLOSEST
POINT OF APPROACH SEPARATION — 1002

1004 [TRAFFIC KNOWLEDGE] → TRAFFIC KNOWLEDGE

1006 [SEPARATION LIMITS] → SEPARATION LIMITS

1008 [RESPONSE LIMITS] → RESPONSE LIMITS

1010 [LOOK AHEAD TIME] → TIME HORIZON

1012 [WIND PREDICTIONS] → WIND PREDICTIONS

1014 [AIRCRAFT MODELS] → AIRCRAFT MODELS

3D/4D TRAJECTORIES

AIRCRAFT 1 3D/4D TRAJECTORY — 1016

AIRCRAFT 2 3D/4D TRAJECTORY — 1018

AIRCRAFT 3 3D/4D TRAJECTORY — 1020

AIRCRAFT n 3D/4D TRAJECTORY — 1022

EP 2 555 179 B1

FIG. 11

EP 2 555 179 B1

50

1182

LIMITED CLIMB
RATE COMMAND
1180

1206

b

1212

1209

1204

Ki
s

1211

1210

1214

Kp

+ +

1202

1208

1

CLIMB
ACCELERATION
COMMAND
1184

**FIG. 12**

VrelX(VrelXR)

1308

1310

1300

Vrel

dm

1306

1304

R

VrelXR

1312

1302

**FIG. 13**

FIG. 14

FIG. 15

FIG. 16

$$if\ t_{cpa} < 0\ \&\ ||R|| < d_{min}$$

$$V_{rel\_mod} = V_{rel} - \left(V_{rel} \bullet \frac{R}{||R||}\right)\frac{R}{||R||}$$

FIG. 17

START

1800 — IDENTIFY A FIRST PATH FOR A FIRST VEHICLE

1802 — IDENTIFY A SECOND PATH FOR A SECOND VEHICLE

1804 — PREDICT A CLOSEST POINT OF APPROACH BETWEEN A FIRST VEHICLE TRAVELING ALONG A FIRST PATH AND A SECOND VEHICLE TRAVELING ALONG A SECOND PATH

1806 — IDENTIFY A MISS DISTANCE BETWEEN THE FIRST VEHICLE AND THE SECOND VEHICLE AT THE CLOSEST POINT OF APPROACH

IS A DESIRED LEVEL OF SEPARATION BETWEEN THE FIRST VEHICLE AND THE SECOND VEHICLE PREDICTED AT THE CLOSEST POINT BASED ON THE MISS DISTANCE?
1808

YES

NO

1810 — GENERATE A NUMBER OF COMPENSATION COMMANDS FOR ALTERING THE FIRST PATH OF THE FIRST VEHICLE USING THE CLOSEST POINT OF APPROACH AND THE DESIRED LEVEL OF SEPARATION BETWEEN THE FIRST VEHICLE AND THE SECOND VEHICLE

1812 — INTEGRATE THE NUMBER OF COMPENSATION COMMANDS WITH A NUMBER OF CONTROL COMMANDS FOR THE FIRST VEHICLE TO FORM A FINAL NUMBER OF CONTROL COMMANDS CONFIGURED TO MANEUVER THE FIRST VEHICLE TO SUBSTANTIALLY MAINTAIN THE DESIRED LEVEL OF SEPARATION BETWEEN THE FIRST VEHICLE AND THE SECOND VEHICLE

1814 — MONITOR THE TRAVEL OF THE FIRST VEHICLE AND THE SECOND VEHICLE

FIG. 18

## FIG. 19

1900

DATA PROCESSING SYSTEM

1916    1906  STORAGE DEVICES    1908

1904

MEMORY

PERSISTENT
STORAGE

PROCESSOR UNIT

1902

1910    1912    1914

COMMUNICATIONS
UNIT

INPUT/OUTPUT
UNIT

DISPLAY

COMPUTER PROGRAM PRODUCT

COMPUTER READABLE MEDIA

PROGRAM CODE

1918

COMPUTER READABLE
STORAGE MEDIA

1924    1926

1922

COMPUTER READABLE
SIGNAL MEDIA

1920

2000

FIG. 20

2002

2010

2006

2008

2004    2004    2012

EP 2 555 179 B1

**EP 2 555 179 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090088972 A